# EUROPEAN PATENT APPLICATION

(11) **EP 4 834 892 A1**
(43) Date of publication of application: **04.11.2026**
(21) Application number: 24913112.9
(22) Date of filing: 27.12.2024
(51) Int. Cl.: C07D 311/94, G02B 5/23, G02C 7/10

(54) **PHOTOCHROMIC COMPOUND, PHOTOCHROMIC COMPOSITION, PHOTOCHROMIC ARTICLE, AND EYEGLASSES**

(30) Priority: 28.12.2023 JP 2023222649
(71) Applicant: HOYA LENS THAILAND LTD., Pathumthani 12130 (TH)
(72) Inventor: KAWAKAMI, Hironori, Tokyo 160-8347 (JP)
(74) Representative: Hoffmann Eitle
(86) International application number: PCT/JP2024/046413
(87) International publication number: WO 2025/143226

(57) **Abstract**

Provided is a photochromic compound represented by General Formula 1 below and having no perfluoromethyl and perfluoromethylene groups. 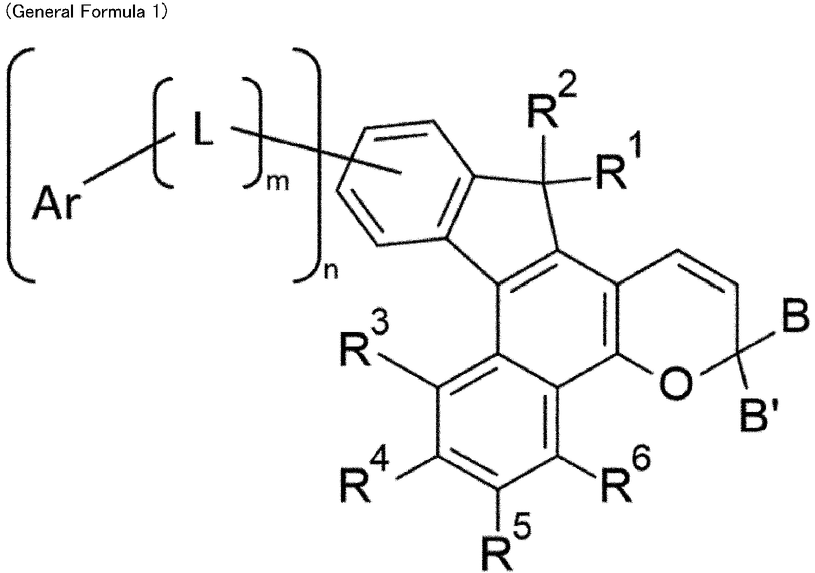 (In General Formula 1, Ar represents a fluorinated aryl group, L represents a divalent linking group, R¹ to R⁶, B, and B' each independently represent a hydrogen atom or a substituent, m represents 0 or 1, and n represents an integer ranging from 1 to 4.)

## Description

### Technical Field

The present invention relates to a photochromic compound, a photochromic composition, a photochromic article, and spectacles.

### Background Art

Photochromic compounds are compounds that exhibit properties (photochromic properties), coloring under irradiation with light in the wavelength range for which the photochromic compounds become photosensitive and fading when not irradiated. For example, PTL 1 discloses a naphthopyran compound having photochromic properties.

### Citation List

### Patent Literature

PTL 1: EP 2078006 B1

### Summary of Invention

### Technical Problem

As a method of imparting photochromic properties to an article such as a spectacle lens, a method of incorporating a photochromic compound into a substrate and a method of forming a layer containing a photochromic compound may be mentioned. As the desired properties for articles with such photochromic characteristics, the ability to exhibit rapid fading rate after being colored by irradiation with light may be mentioned. Accordingly, a photochromic compound is desired to exhibit a rapid fading rate after being colored.

By the way, in recent years, a proposal (PFAS regulation) has been put forward under the European REACH regulation to restrict organic fluorine compounds (PFAS) containing perfluoromethyl and/or perfluoromethylene groups. Therefore, it is also desired that the photochromic compound is not subject to the PFAS regulation.

One aspect of the present invention has an object to provide a photochromic compound that has no perfluoromethyl and perfluoromethylene groups and exhibit rapid fading rate after being colored.

### Solution to Problem

One aspect of the present invention relates to a photochromic compound represented by General Formula 1 below and having no perfluoromethyl and perfluoromethylene groups.

One aspect of the present invention relates to a photochromic article containing at least one photochromic compound represented by General Formula 1 below and having no perfluoromethyl and perfluoromethylene groups.

In addition, one aspect of the present invention relates to a photochromic composition containing at least one photochromic compound represented by General Formula 1 below and having no perfluoromethyl and perfluoromethylene groups.

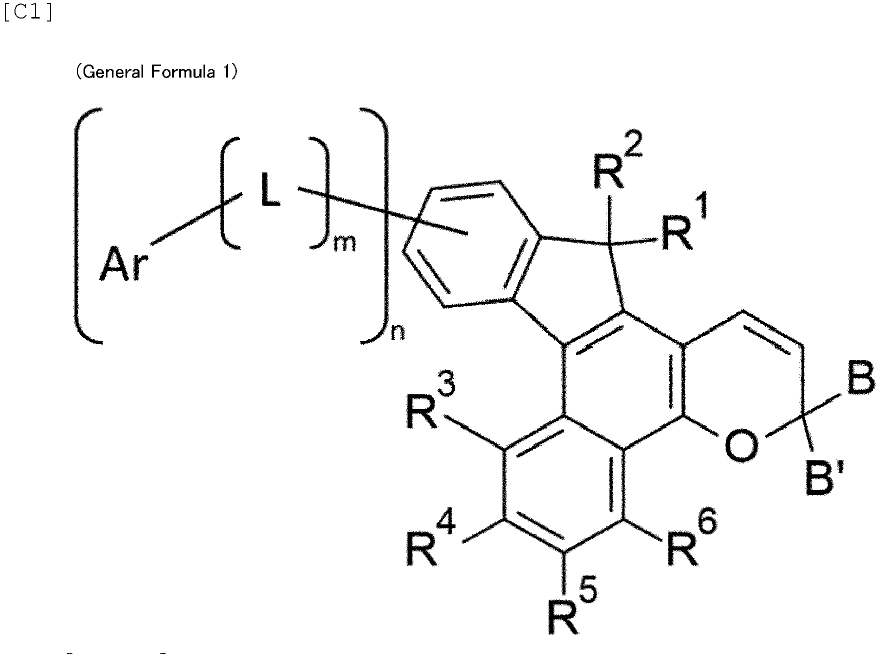

In General Formula 1, Ar represents a fluorinated aryl group, L represents a divalent linking group, R¹ to R⁶, B, and B' each independently represent a hydrogen atom or a substituent, m represents 0 or 1, and n represents an integer ranging from 1 to 4.

### Advantageous Effects of Invention

The compound represented by General Formula 1 has no perfluoromethyl and perfluoromethylene groups and can exhibit a fast fading rate after being colored. The compound represented by General Formula 1 makes it possible to provide a photochromic article that exhibits a fast fading rate after being colored.

### Description of Embodiments

As an example, a photochromic compound is irradiated with light, such as sunlight, and undergoes structural conversion into a colored form through an excited state. The structure after structural conversion through irradiation with light may be called a "colored form". In contrast, the structure before irradiation with light may be called a "colorless form". Here, regarding the colorless form, the term "colorless" is not limited to being completely colorless, and includes a case in which the color is lighter than that of the colored form. The structure of General Formula 1 is a structure of the colorless form.

In the present invention and this specification, the term "photochromic article" shall refer to an article containing a photochromic compound. A photochromic article according to one aspect of the present invention at least contains at least one photochromic compound represented by General Formula 1 as a photochromic compound. The photochromic compound may be incorporated into a substrate of a photochromic article and/or may be incorporated into a photochromic layer in a photochromic article having a substrate and a photochromic layer. The term "photochromic layer" refers to a layer containing a photochromic compound.

In the present invention and this specification, the term "photochromic composition" shall refer to a composition containing a photochromic compound. A photochromic composition according to one aspect of the present invention at least contains at least one photochromic compound represented by General Formula 1 as a photochromic compound, and may be used to produce a photochromic article according to one aspect of the present invention.

In the present invention and the present specification, substituents in various general formulas to be described in detail below and substituents when each group to be described below has a substituent may each independently be the following substituents:
a substituent R^{m} selected from the group consisting of a hydroxy group; a C1-18 linear or branched alkyl group, such as a methyl group, an ethyl group, a propyl group, a butyl group, a pentyl group, and a hexyl group; a C5-18 cycloaliphatic alkyl group of a single-ring type, or a bicyclo or other multi-ring type, such as a cyclopentyl group and a cyclohexyl group; a linear or branched alkoxy group having 1 to 24 constituent atoms, such as a methoxy group, an ethoxy group, and a butoxy group; a non-aromatic cyclic substituent having 1 to 24 constituent atoms; a C2-18 linear or branched perfluoroalkyl group; a linear or branched perfluoroalkoxy group (excluding a perfluoromethoxy group); a linear or branched alkyl sulfide group having 1 to 24 constituent atoms, such as a methyl sulfide group, an ethyl sulfide group, and a butyl sulfide group; an aryl group, such as a phenyl group, a naphthyl group, an anthracenyl group, a fluoranthenyl group, a phenanthryl group, a pyranyl group, a perylenyl group, a styryl group, and a fluorenyl group; an aryloxy group, such as a phenyloxy group; an aryl sulfide group, such as a phenyl sulfide group; a heteroaryl group, such as a pyridyl group, a furanyl group, a thienyl group, a pyrrolyl group, a benzofuranyl group, a benzothiophenyl group, an indolyl group, a dibenzofuranyl group, a dibenzothiophenyl group, a carbazolyl group, a diazolyl group, a triazolyl group, a quinolinyl group, a phenothiazinyl group, a phenoxazinyl group, a phenazinyl group, a thianthryl group, and an acridinyl group; an amino group (-NH₂); a monoalkylamino group, such as a monomethylamino group; a dialkylamino group, such as a dimethylamino group; a monoarylamino group, such as a monophenylamino group; a diarylamino group, such as a diphenylamino group; a cyclic amino group, such as a piperidino group, a morpholino group, a thiomorpholino group, a tetrahydroquinolino group, and a tetrahydroisoquinolino group; an ethynyl group; a mercapto group; a silyl group; a sulfonic acid group; an alkylsulfonyl group; a formyl group; a carboxy group; a cyano group; and a halogen atom, such as a fluorine atom, a chlorine atom, a bromine atom, and an iodine atom; or
a substituent in which R^{m} is additionally substituted with at least one same or different R^{m}.

As an example of the substituent in which the above R^{m} is additionally substituted with at least one same or different R^{m}, a structure in which the terminal carbon atom of an alkoxy group is additionally substituted with another alkoxy group, and the terminal carbon atom of the alkoxy group is additionally substituted with another alkoxy group may be exemplified. In addition, as another example of the substituent in which the above R^{m} is additionally substituted with at least one of the same or different R^{m}, a structure in which two or more positions among five substitutable positions of a phenyl group are substituted with the same or different R^{m} may be exemplified. However, the present invention is not limited to such examples.

In the present invention and this specification, unless otherwise specified, groups described are substituted or unsubstituted groups. In the present invention and this specification, "substituted or unsubstituted" is synonymous with "having at least one substituent or unsubstituted". The terms "the number of carbon atoms" and "the number of constituent atoms" shall refer to the numbers including the number of carbon atoms or the number of atoms in a substituent, when referring to a group having a substituent, unless otherwise specified.

In addition, in the present invention and this specification, substituents in various general formulas of which details will be described below, and substituents when respective groups to be described below have substituents may each independently be a solubilizing group. In the present invention and this specification, the term "solubilizing group" refers to a substituent that can contribute to increasing the compatibility with any liquid or a specific liquid. The solubilizing group is suitably a substituent that can contribute to promoting the thermal motion of molecules of a compound by possessing this substituent, and examples of solubilizing groups may include an alkyl group including a linear, branched, or cyclic structure having 4 to 50 carbon atoms; a linear, branched, or cyclic alkoxy group having 4 to 50 constituent atoms; a linear, branched, or cyclic silyl group having 4 to 50 constituent atoms, a group in which part of the above group is substituted with a silicon atom, a sulfur atom, a nitrogen atom, a phosphorus atom, or the like, and a group obtained by combining two or more of the above groups. A compound having a solubilizing group as a substituent can inhibit the distance between solute molecules from decreasing, thereby preventing the solute from solidifying, and can lower the melting point and/or glass transition temperature of the solute to form a molecule aggregation state close to that of a liquid. Therefore, the solubilizing group can liquefy a solute or increase the solubility of a compound having this substituent in a liquid. In one embodiment, the solubilizing group is preferably an n-butyl group, n-pentyl group, n-hexyl group, and n-octyl group, which are linear alkyl groups, a tert-butyl group, which is a branched alkyl group, or a cyclopentyl group and a cyclohexyl group, which are cyclic alkyl groups.

The substituent is preferably a substituent selected from the group consisting of a methoxy group, an ethoxy group, a phenoxy group, a methylsulfide group, an ethylsulfide group, a phenylsulfide group, a phenyl group, a naphthyl group, a dibenzofuranyl group, a dibenzothiophenyl group, a carbazolyl group, a phenothiazinyl group, a phenoxazinyl group, a phenazinyl group, an acridinyl group, a dimethylamino group, a diphenylamino group, a piperidino group, a morpholino group, a thiomorpholino group, a cyano group, and a solubilizing group, and more preferably a substituent selected from the group consisting of a methoxy group, a phenoxy group, a methylsulfide group, a phenylsulfide group, a phenyl group, a dimethylamino group, a diphenylamino group, a piperidino group, a morpholino group, a thiomorpholino group, a cyano group, and a solubilizing group.

In the present invention and the present specification, the term "electron-donating group" refers to a substituent that tends to donate electrons to a bonding atom side more easily, as compared to a hydrogen atom. An electron-donating group may be a substituent that tends to donate electrons due to the sum of the inductive effect, the mesomeric effect (or resonance effect), and the like. Specific examples of electron-donating groups may include a hydroxy group: -OH, a thiol group: -SH, an alkoxy group: -OR (where R is an alkyl group), an alkylsulfide group: -SR (where R is an alkyl group), an arylsulfide group, an acetyl group: -OCOCH₃, an amino group: -NH₂, an alkylamido group: -NHCOCH₃, a dialkylamino group: -N(R)₂ (where two Rs are the same or different alkyl groups), a morpholino group, a piperidino group, a methyl group, and the like. Examples of preferable electron-donating groups may include an electron-donating group having a negative value for the substituent constant σₚ at the para position based on Hammett's rule.

Specific examples of the substituent constant σₚ at the para position based on Hammett's rule (source: edited by Hiizu IWAMURA, Ryoji NOYORI, Takeshi NAKAI, and Isao KITAGAWA, Organic Chemistry for Graduate School (volume 1) (1988)) are shown below.
- N(CH₃)₂: -0.83
- OCH₃: -0.27
- t-C₄H₉: -0.20
- CH₃: -0.17
- C₂H₅: -0.15
- C₆H₅: -0.01
   (-H: 0)
- F: +0.06
- Cl: +0.27
- Br: +0.23
- CO₂C₂H₅: +0.45
- CF₃: +0.54
- CN: +0.66
- SO₂CH₃: +0.72
- NO₂: +0.78

### [Photochromic Compound]

The photochromic compound according to one aspect of the present inventionis a photochromic compound represented by General Formula 1 and having no perfluoromethyl and perfluoromethylene groups. Such a photochromic compound has neither a perfluoromethyl group nor a perfluoromethylene group.

Hereinafter, General Formula 1 will be described in more detail.

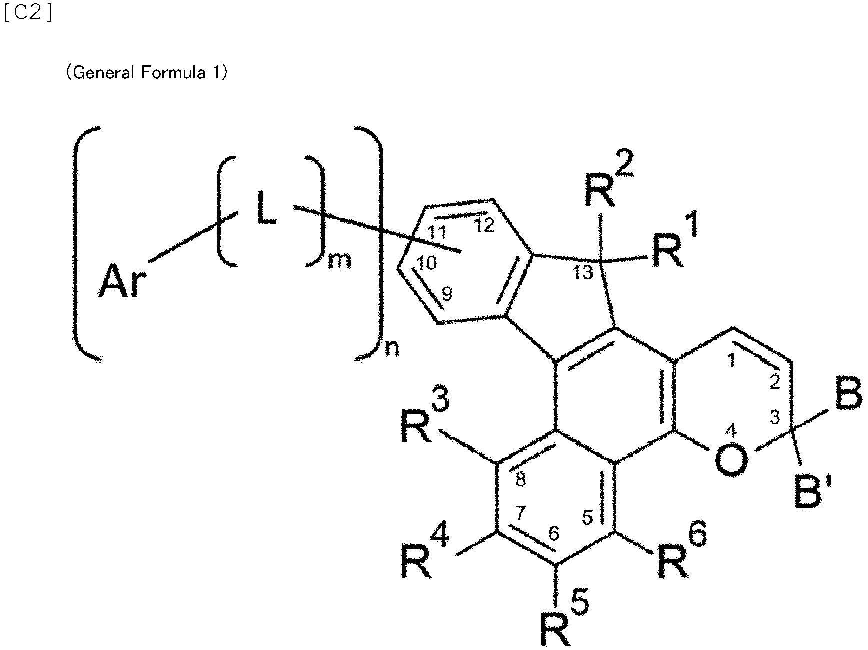

In General Formula 1, Ar represents a fluorinated aryl group. The term "fluorinated aryl group" refers to an aryl group substituted with at least one fluorine atom. Examples of aryl groups may include a C6-10 aryl group, such as a phenyl group, a biphenyl group, a tolyl group, or a naphthyl group, and a phenyl group is preferable. That is, in one embodiment, Ar may be a fluorinated phenyl group.

The number of fluorine atoms substituting the aryl group in the fluorinated aryl group is 1 or more, and may be 2 or more, or 3 or more. In one embodiment, a fluorinated aryl group represented by Ar may be an aryl group in which all positions capable of being substituted with fluorine atoms are substituted with fluorine atoms.

In one embodiment, Ar is preferably a fluorinated phenyl group substituted with three or more fluorine atoms, more preferably a fluorinated phenyl group substituted with four or more fluorine atoms, and still more preferably a perfluorophenyl group.

In General Formula 1, n represents an integer ranging from 1 to 4. When n represents an integer ranging from 2 to 4, a plurality of Ars are present in General Formula 1. The plurality of Ars may be the same or different.

The positions of substitution of the phenyl group are as follows.

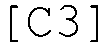

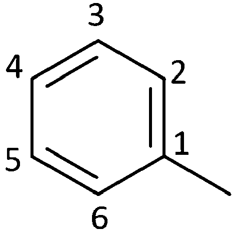

Specific examples of fluorinated phenyl groups may include the following.

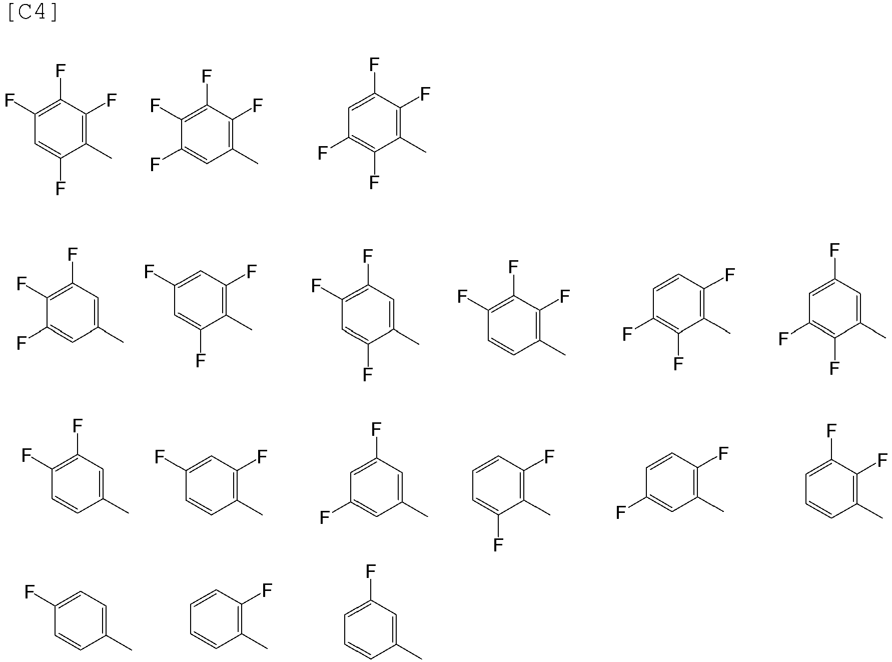

In one embodiment, Ar is preferably a phenyl group substituted with fluorine atoms at least at the 3- and 5-positions.

In one embodiment, the inventor infers that when Ar is a fluorinated phenyl group, it is preferred that fluorine atoms are substituted at the para position (4-position) and the ortho position (2-position), and it is more preferable that a fluorine atom is substituted at the para position (4-position), from the viewpoint of the orientation of the substituent effect.

The inventor infers that it is preferred that a fluorine atom substitutes at a position away from the indeno-condensed naphthopyran substituted with Ar from the viewpoint of an inductive effect. That is, the present inventor infers that it is preferred for the fluorine atoms to substitute the para position (4-position) for one substitution, the meta position (3-position) and para position (4-position) for two substitutions, and the meta position (3-position), para position (4-position), and meta position (5-position) for three substitutions.
However, the present invention is not limited by the inferences described in the present specification.

In one embodiment, when the fluorinated aryl group represented by Ar is a trifluorophenyl group, the three fluorine atoms may substitute the ortho position, the ortho position, and the para position (that is, 2-, 4-, and 6-positions) relative to the carbon atom substituted with Ar in the indeno-condensed naphthopyran.

In General Formula 1, the fluorinated aryl group represented by Ar substitutes at least one of the carbon atoms at the 9-, 10-, 11-, or 12-position of the indeno-condensed naphthopyran directly or via L. When n represents 1, it is preferred that the fluorinated aryl group represented by Ar substitutes the carbon atom at the 11-position of the indeno-condensed naphthopyran directly or via L. When n represents 2, it is preferred that the fluorinated aryl groups represented by Ar substitute the carbon atoms at the 10- and 12-positions of the indeno-condensed naphthopyran directly or via L.

In General Formula 1, L represents a divalent linking group, and m represents 0 or 1. When m represents 0, Ar is directly bonded to the carbon atom of the indeno-condensed naphthopyran. When n represents an integer ranging from 2 to 4, a plurality of Ls can be present in General Formula 1. The plurality of Ls may be the same or different. When n represents the range of 2 to 4, a plurality of partial structures represented by "Ar-(L)m -" are present in General Formula 1. In this case, in at least one of the plurality of "Ar-(L)m-"s, m may be 0 and no L may be present and in at least one of the others, m may be 1 and L may be present, or in all "AR-(L)m-"s, m may be 0 and L may not be present. In one embodiment, n may represent 1 or 2, and m may represent 0.

Examples of divalent linking groups represented by L may include an alkylene group, an arylene group, and the like. Examples of alkylene groups may include a C1-18 linear or branched alkyl group, such as a methylene group, an ethylene group, a propylene group, a butylene group, a pentylene group, and a hexylene group; a monocyclic cycloaliphatic C5-18 alkylene group, such as a cyclopentylene group or a cyclohexylene group, or a polycyclic cycloaliphatic C5-18 alkylene group, such as a bicyclic ring; and a C6-10 arylene group, such as a phenylene group, a biphenylene group, a trylene group, or a naphthylene group.

In General Formula 1, R¹ to R⁶ each independently represent a hydrogen atom or a substituent. Two or more of R¹ to R⁶ may be bonded together to form a ring structure.

In one embodiment, R¹ and R² each independently represent a substituted or unsubstituted alkyl group. When R¹ and R² represent substituted or unsubstituted alkyl groups, the alkyl groups may be the same or different. Examples of the alkyl group may include a substituted or unsubstituted, linear or branched C1-18 alkyl group. A substituted or unsubstituted, linear or branched C1-6 alkyl group is preferable, a substituted or unsubstituted linear C1-6 alkyl group is more preferable, and a substituted or unsubstituted linear C1-3 alkyl group (substituted or unsubstituted methyl, ethyl, and propyl groups) are still more preferred, and a substituted or unsubstituted methyl or ethyl group is even more preferable. Examples of substituents may include an alkoxy group (for example, a methoxy group, an ethoxy group, and the like).

In another embodiment, R¹ and R² are bonded together to form a ring structure having 3 or more carbon atoms, the ring structure constituting a ring including a carbon atom at the 13-position of indeno-condensed naphthopyran. In this case, the carbon atom at the 13-position of indeno-condensed naphthopyran may be a spiro atom shared by the ring structure and the indeno-condensed naphthopyran. That is, the ring structure may be a ring structure spiro-condensed with indeno-condensed naphthopyran.

The ring structure may be a monocyclic structure, may be a condensed polycyclic structure, such as a bicyclic or tricyclic structure, may be a bridged ring structure, such as a bicyclic structure, and may be a spiro ring structure, such as a bicyclic structure.

Examples of the ring structure may include an aliphatic ring. Such an aliphatic ring may be unsubstituted or may have a substituent. For substituents, reference may be made to the preceding description regarding substituents.

Examples of the aliphatic ring may include an aliphatic ring in which the number of carbon atoms constituting the ring including the carbon atom at the 13-position of indeno-condensed naphthopyran is 3 or more and 20 or less. Specific examples thereof may include a monocyclic ring, such as a cyclohexane ring, a cyclooctane ring, and a cycloheptane ring; a bicyclo ring, such as a norbornane ring and a bicyclononane ring; and a tricyclo ring, such as an adamantane ring. In the case of an aliphatic ring having a substituent, the "number of carbon atoms constituting a ring" shall include the number of carbon atoms contained in the substituent. In the case of a ring structure having a substituent, the "number of atoms constituting the ring including the carbon atom at the 13-position of indeno-condensed naphthopyran" to be described below shall include the number of atoms contained in the substituent.

In one embodiment, when the ring structure is an aliphatic ring, the number of carbon atoms constituting such an aliphatic ring is preferably 3 or more and 6 or less, may be 3, 4, 5 or 6, and is more preferably 6. In addition, in another embodiment, the number of carbon atoms constituting such an aliphatic ring is preferably 7 or more and 20 or less, may be 7, 8, 9, 10, 11, 12, 13, 14, 15, 16, 17, 18, 19, or 20, and is more preferably 7, 8 or 10.

In addition, examples of thering structure may include a condensed polycycle in which at least one ring structure selected from the group consisting of an aromatic ring and an aromatic heterocycle is condensed to an aliphatic ring in which the number of carbon atoms constituting the ring including the carbon atom at the 13-position of indeno-condensed naphthopyran is 3 or more and 20 or less;
a heterocycle in which the number of carbon atoms constituting the ring including the carbon atom at the 13-position of indeno-condensed naphthopyran is 3 or more and 20 or less; and
a condensed polycycle in which at least one ring structure selected from the group consisting of an aromatic ring and an aromatic heterocycle is condensed to the heterocycle.

Specific examples of condensed polycycles in which at least one structure selected from the group consisting of an aromatic ring and an aromatic heterocycle is condensed to an aliphatic ring in which the number of carbon atoms constituting the ring including the carbon atom at the 13-position of indeno-condensed naphthopyran is 3 or more and 20 or less may include a fluorene ring.

Specific examples of heterocycles in which the number of atoms constituting the ring including the carbon atom at the 13-position of indeno-condensed naphthopyran is 3 or more and 20 or less may include a thiophene ring, a furan ring, and a pyridine ring.

Examples of condensed polycycles in which at least one ring structure selected from the group consisting of an aromatic ring and an aromatic heterocycle is condensed to the heterocycle may include a phenylfuran ring and a biphenylthiophene ring.

Specific examples of the ring structure represented by A may include the following ring structures. Here, in the following, the carbon atom at the 13-position is the carbon atom at the 13-position of indeno-condensed naphthopyran in General Formula 1.

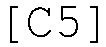

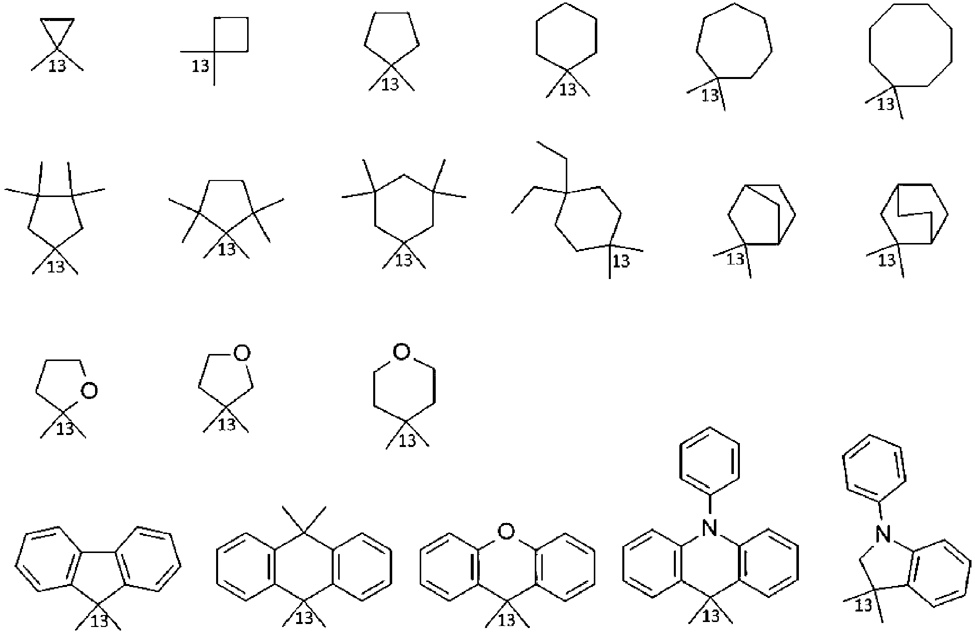

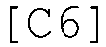

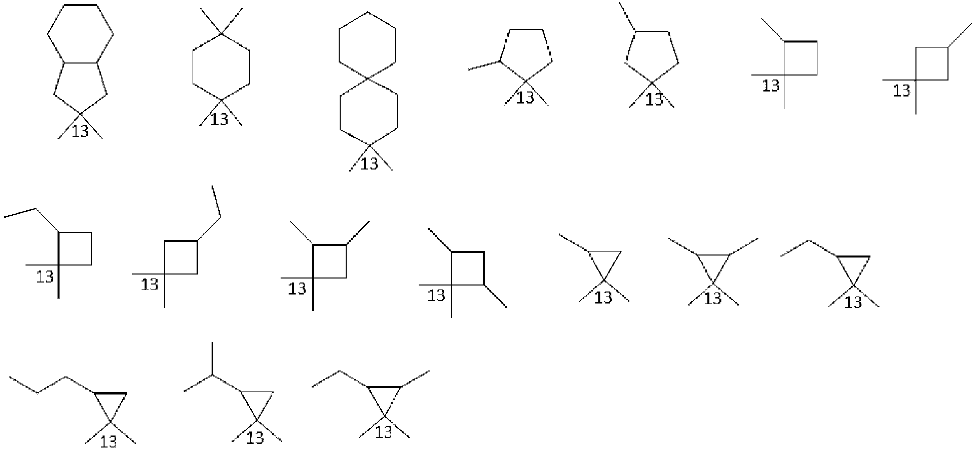

In one embodiment, the ring structure is preferably one of the following ring structures.

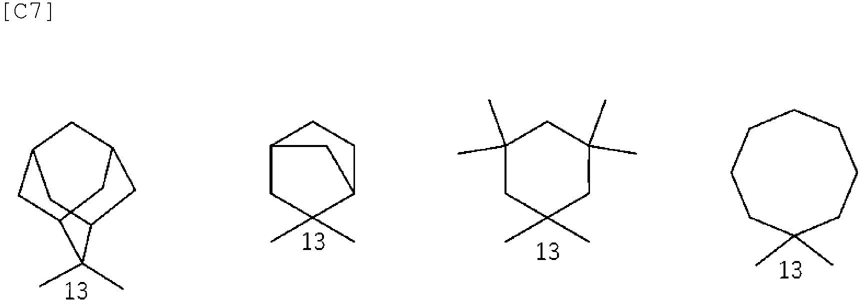

In one embodiment, at least either of R⁴ and R⁵ may represent an electron-donating group or electron-donating groups. In the present invention and in the specification, "at least either of" is synonymous with "only one or both of". R⁴ and R⁵ each independently represent an electron-donating group. When R⁴ and R⁵ represent electron donating groups, these electron donating groups may be the same or different.

When at least either of R⁴ and R⁵ represents an electron-donating group, one may represent an electron-donating group, and the other may represent a hydrogen atom. In one embodiment, R⁴ may represent an electron-donating group, and R⁵ may represent a hydrogen atom. In another embodiment, R⁴ may represent a hydrogen atom, and R⁵ may represent an electron-donating group.

As the electron-donating group represented by R⁴ and/or R⁵, an electron-donating group selected from the group consisting of an alkoxy group, a morpholino group, and a piperidino group is preferable, and an electron-donating group selected from the group consisting of a methoxy group, a morpholino group, and a piperidino group is more preferable.

In another embodiment, R⁴ and R⁵ both may represent a hydrogen atom.

In another embodiment, R⁵ may represent a fluorinated aryl group. For the fluorinated aryl group represented by R⁵, reference may be made to the preceding description regarding a fluorinated aryl group represented by Ar. In one embodiment, R⁵ may represent a perfluoroaryl group, and preferably represents a perfluorophenyl group.

R³ and R⁶ each independently represent a hydrogen atom or a substituent, and it is preferred that both represent a hydrogen atom.

In General Formula 1, B and B' each independently represent a hydrogen atom or a substituent, and preferably each independently represent a substituent. When B and B' represent substituents, the substituents may be the same or different.

In one embodiment, B and B' may each independently be a substituted or unsubstituted phenyl group. The phenyl group having a substituent may be a 1- to 5-substituted phenyl group. In the phenyl group having two or more substituents, these substituents may be the same or different substituents, and two or more of these substituents may be bonded to form a ring structure. For substituents that the phenyl group has, reference may be made to the preceding description regarding substituents.

In one embodiment, at least either of B and B' may represent a phenyl group having a substituent at a para substitution position relative to the carbon atom at the position bonding to a pyran ring of indeno-condensed naphthopyran. In this case, only one of B and B' may represent a phenyl group having a substituent at a para substitution position to the carbon atom at the position bonding to a pyran ring of indeno-condensed naphthopyran. In addition, both B and B' may each independently represent a phenyl group having a substituent at a para substitution position relative to the carbon atom at the position bonding to a pyran ring of indeno-condensed naphthopyran. The substituent substituting the above para substitution position may be, for example, an electron-donating group. For electron-donating groups, reference may be made to the preceding description regarding electron-donating groups. Specific examples of the electron-donating group substituting the above para substitution position may include an alkoxy group, such as a methoxy group, an ethoxy group, a propoxy group, a butoxy group, and an amino group, such as a dimethylamino group, morpholino group, and piperidino group. Examples thereof may also include an alkoxy group substituted with an alkoxy group, such as a methoxy group, an ethoxy group, a propoxy group, or a butoxy group. Alternatively, an alkoxy group, such as a methoxy group, an ethoxy group, a propoxy group, or a butoxy group, may further substitute.

In addition, in one embodiment, at least either of B and B' may be a phenyl group having a nitrogen atom-containing substituent at a para substitution position relative to the carbon atom at the position bonding to a pyran ring of indeno-condensed naphthopyran. In this case, only one of B and B' may be a phenyl group having a nitrogen atom-containing substituent at a para substitution position relative to the carbon atom at the position bonding to a pyran ring of indeno-condensed naphthopyran. Alternatively, both B and B' may each independently represent a phenyl group having a nitrogen atom-containing substituent at a para substitution position relative to the carbon atom at the position bonding to a pyran ring of indeno-condensed naphthopyran. Examples of nitrogen atom-containing substituents may include an unsubstituted amino group (-NH₂), a substituted amino group (for example, a monoalkyl amino group, such as a monomethyl amino group, a dialkyl amino group, such as a dimethylamino group, a monoaryl amino group, such as a monophenyl amino group, and a diaryl amino group, such as a diphenyl amino group, and the like), and a cyclic amino group (for example, a piperidino group, a morpholino group, a thiomorpholino group, a tetrahydroquinolino group, and a tetrahydroisoquinolino group, and the like).

In addition, in one embodiment, at least either of B and B' may be a phenyl group having a halogen atom, such a fluorine atom, a chlorine atom, a bromine atom, and an iodine atom, at the para substitution position relative to the carbon atom at the position bonding to a pyran ring of indeno-condensed naphthopyran.

Examples of compounds represented by General Formula 1 may include the following compounds.
(1) R¹ and R² each independently represents a substituted or unsubstituted alkyl group having 2 or more carbon atoms, and B and B' each independently represent an unsubstituted phenyl group or a methoxy group-substituted phenyl group.
(2) R¹ and R² each independently represent a substituted or unsubstituted alkyl group having 2 or more carbon atoms, and at least either of B and B' represent an amino group-substituted phenyl group.
(3) R¹ and R² each represent a methyl group, and at least either of B and B' represents an amino group-substituted phenyl group.
(4) R¹ and R² each represent a methyl group, and B and B' each independently represent an unsubstituted phenyl group or a methoxy group-substituted phenyl group.

In the above (1) to (4), the substitution position of the methoxy group or amino group in the phenyl group may be, for example, 4-position.

In the above (1) to (4), examples of the substituent of the substituted alkyl group having 2 or more carbon atoms may include alkoxy groups, such as a methoxy group, an ethoxy group, a propoxy group, and a butoxy group.

In one embodiment, in the items (2) and (3) above, one of B and B' may be an amino group-substituted phenyl group, and the other may be an unsubstituted phenyl group or a substituted or unsubstituted alkoxy group. The alkoxy group may be an alkoxy group, such as a methoxy group, an ethoxy group, a propoxy group, or a butoxy group. Examples of substituents in the substituted alkoxy group may include an alkoxy group, such as a methoxy group, an ethoxy group, a propoxy group, and a butoxy group.

In one embodiment, the compound represented by General Formula 1 may have a molecular weight of 1500 or less. The compound represented by General Formula 1 may be a dimer in which two structures represented by General Formula 1 are linked, or a multimer in which three or more structures are linked. From the perspective of the photochromic property, it is preferred that the number of units exhibiting a photochromic property in one molecule be small. From this perspective, it is preferred that the compound represented by General Formula 1 be a monomer.

Examples of compounds represented by General Formula 1 may include the following compounds. Specific examples of respective parts in General Formula 1 may include those included in the following exemplary compounds. However, the present invention is not limited to the following exemplary compounds.

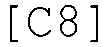

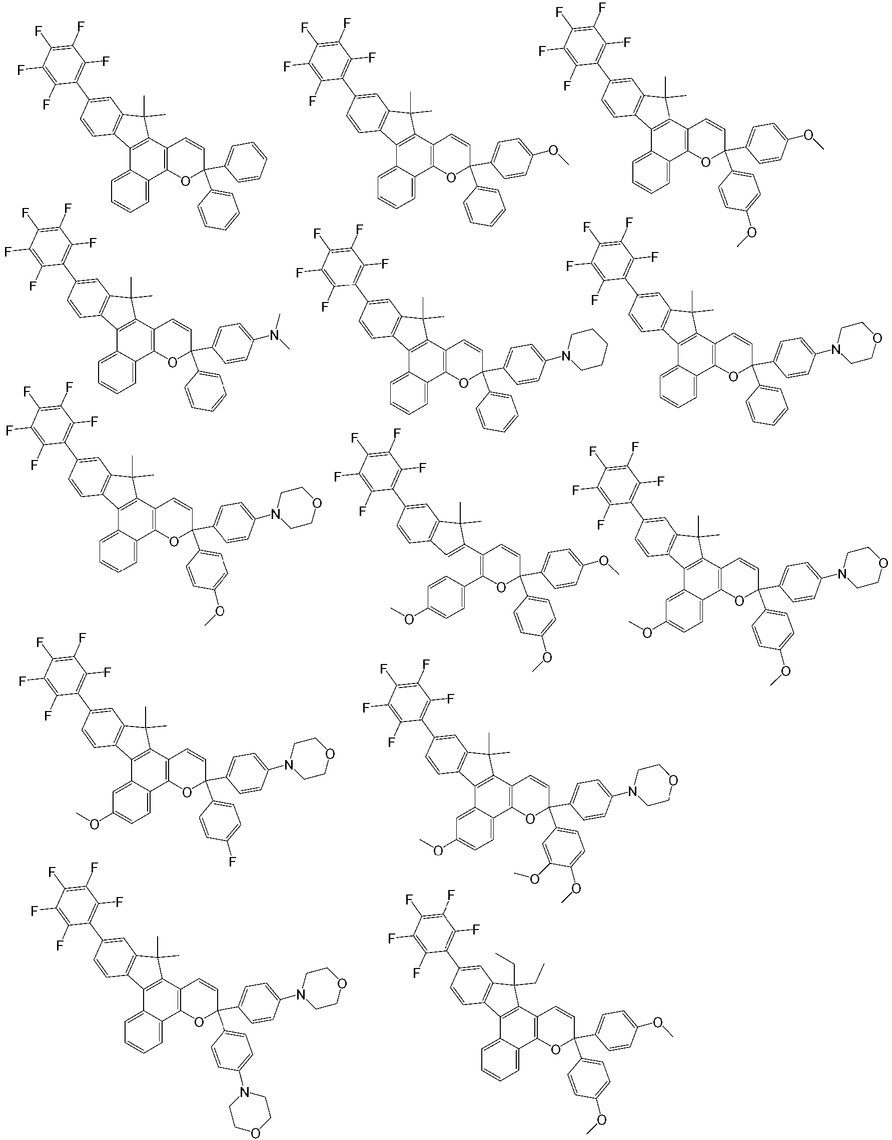

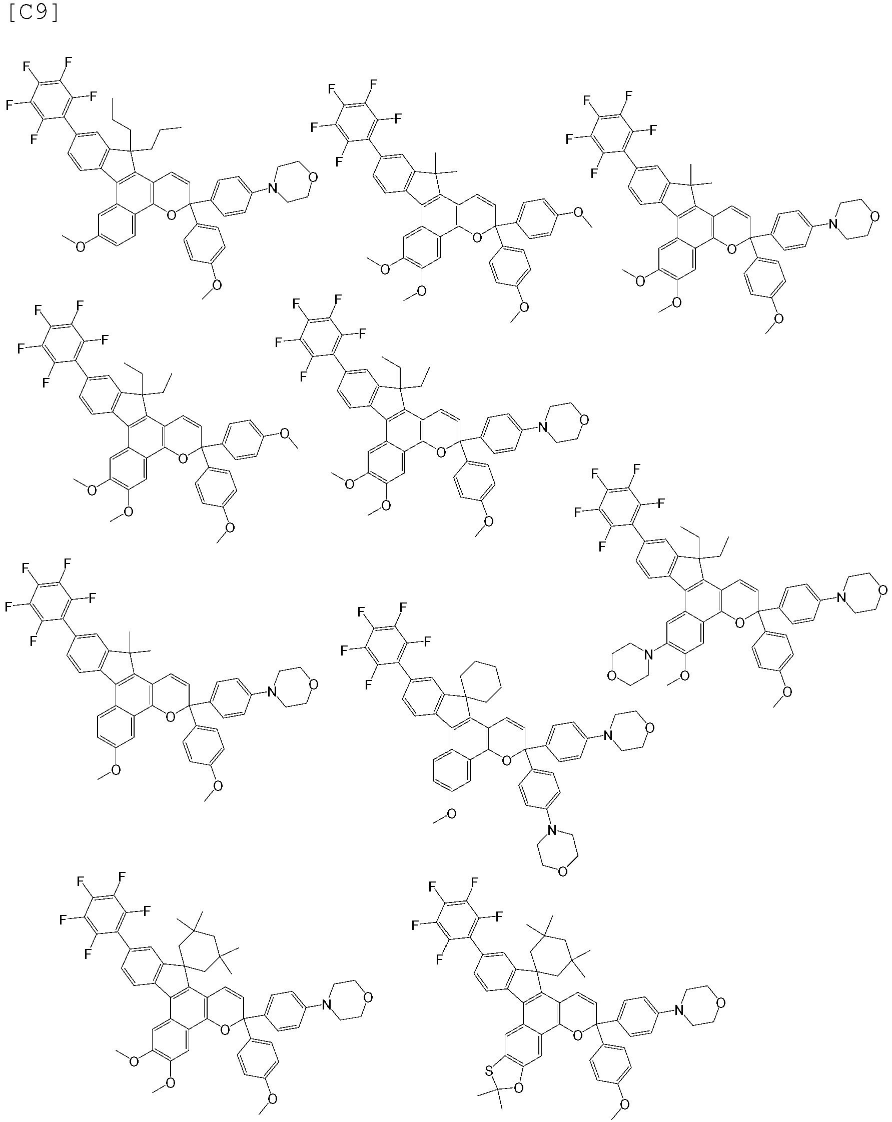

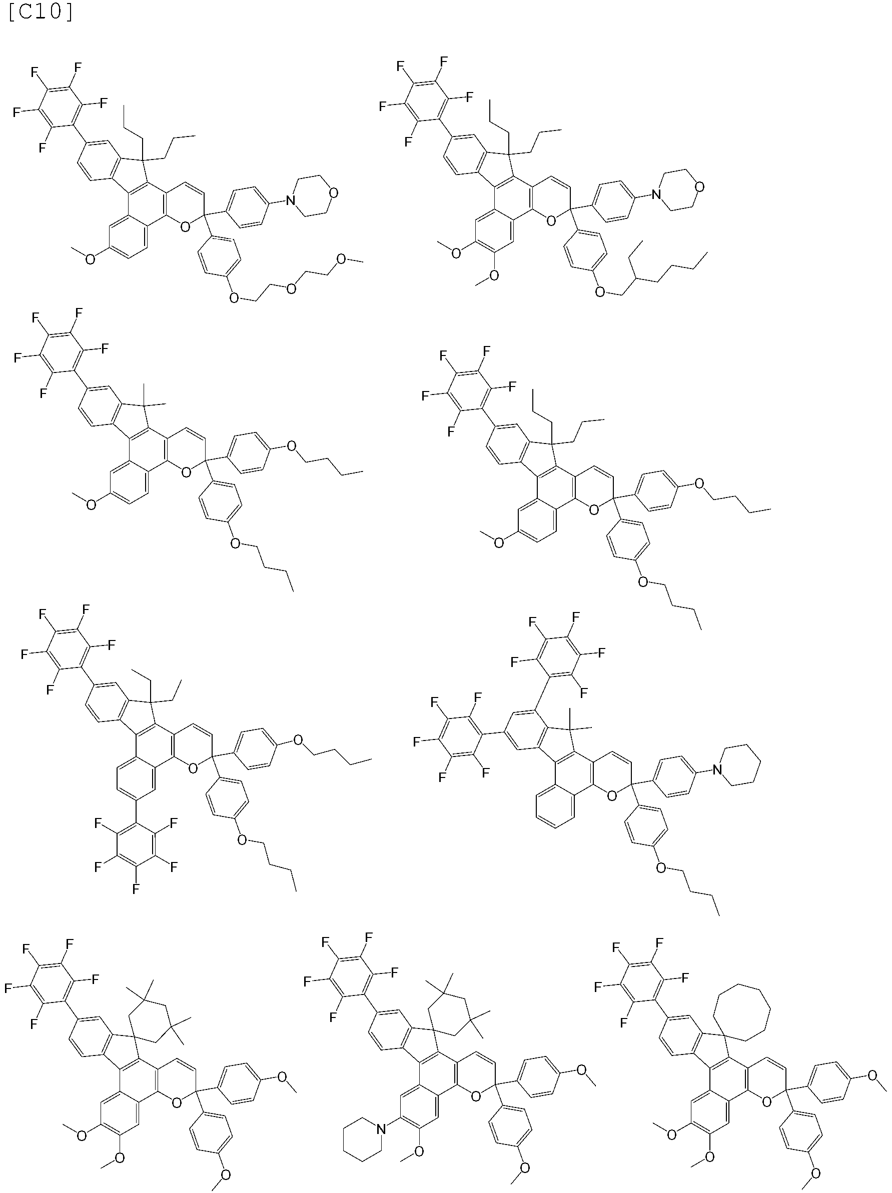

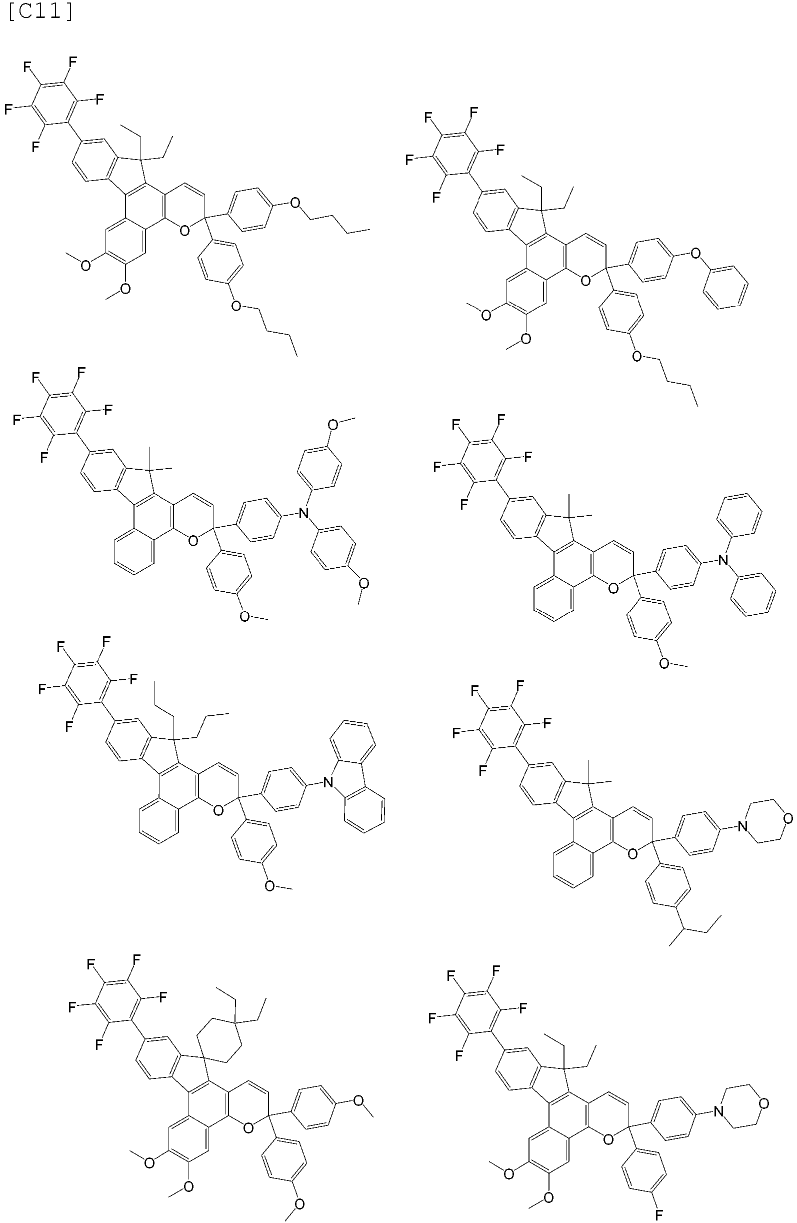

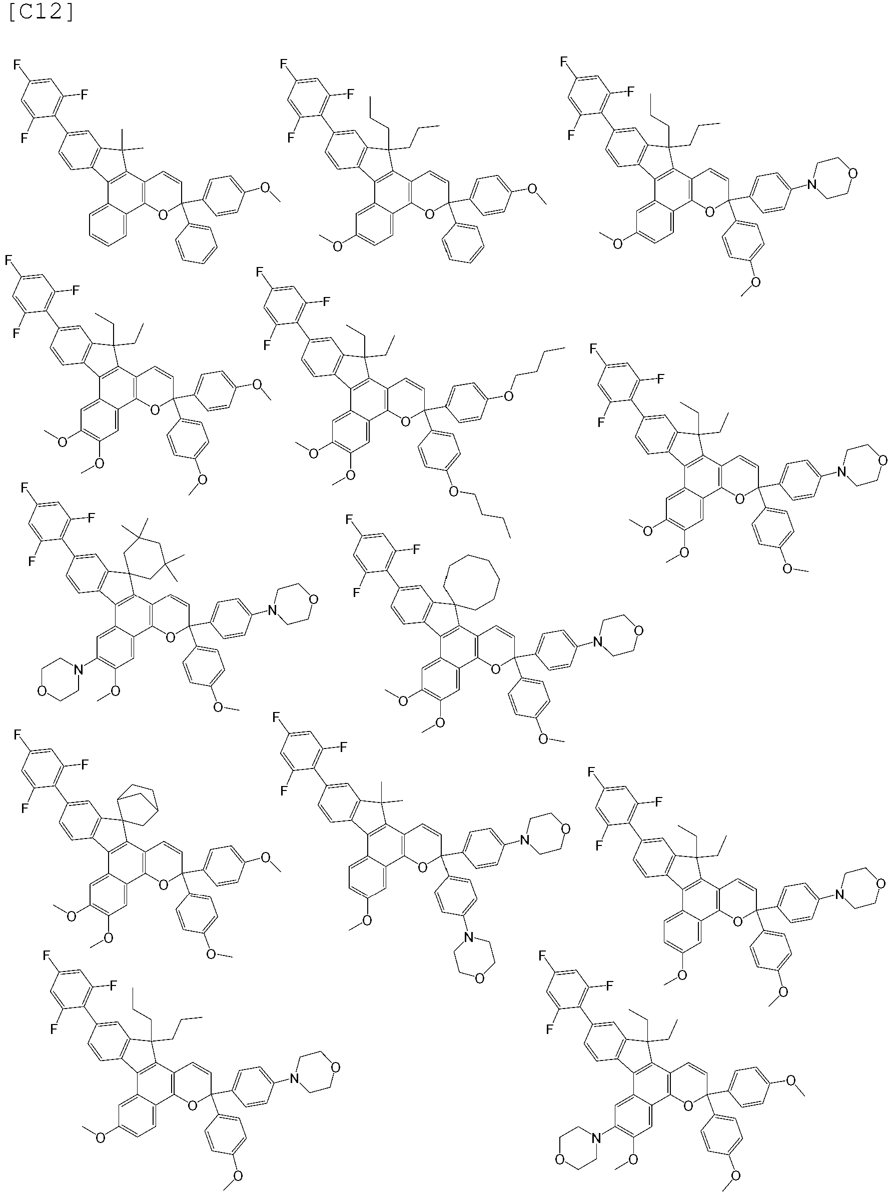

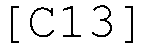

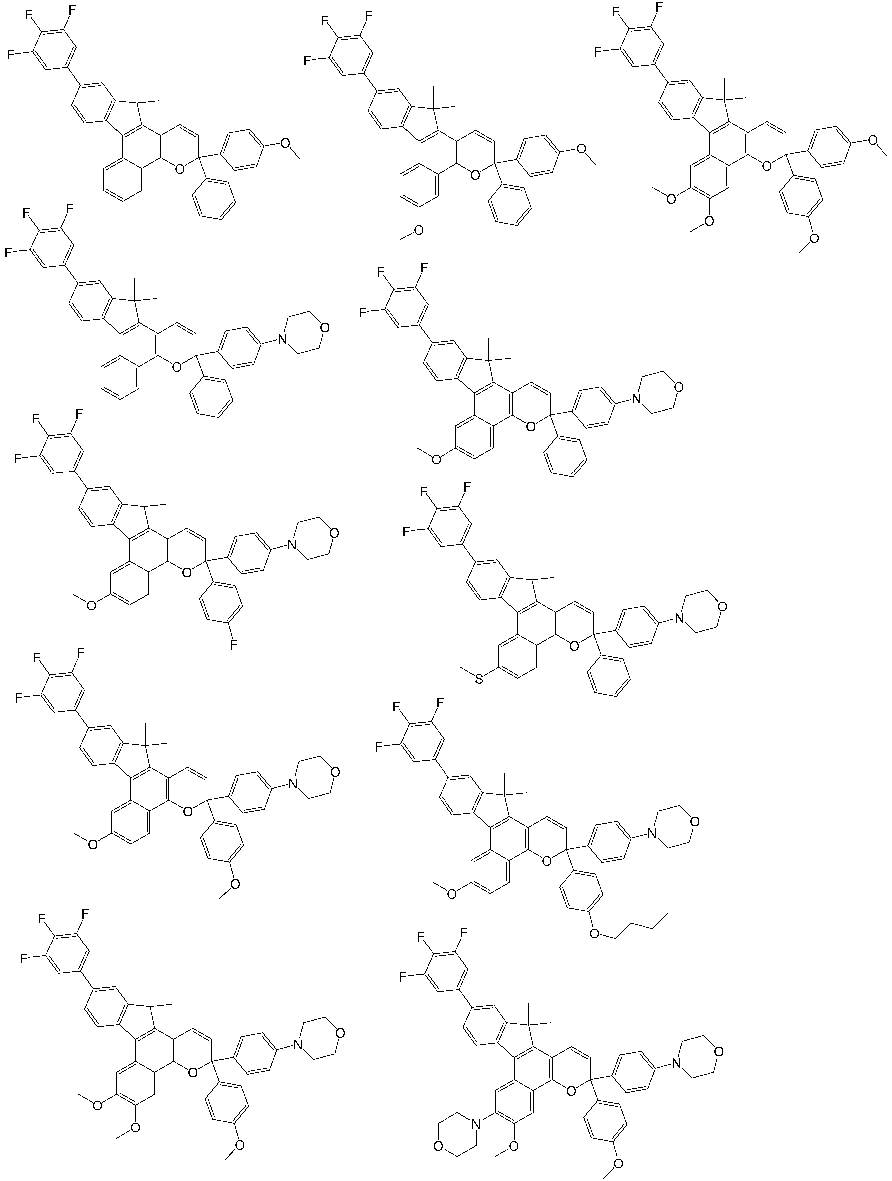

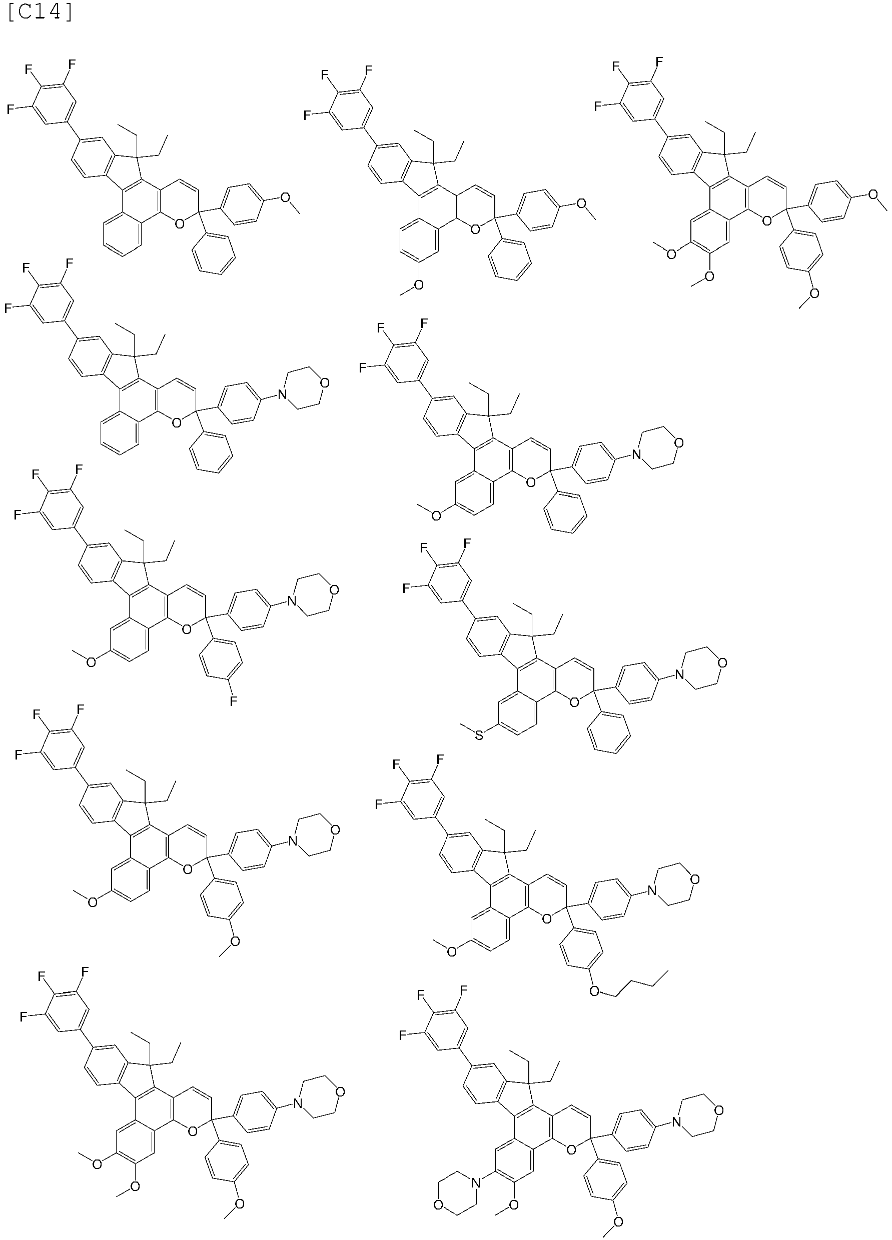

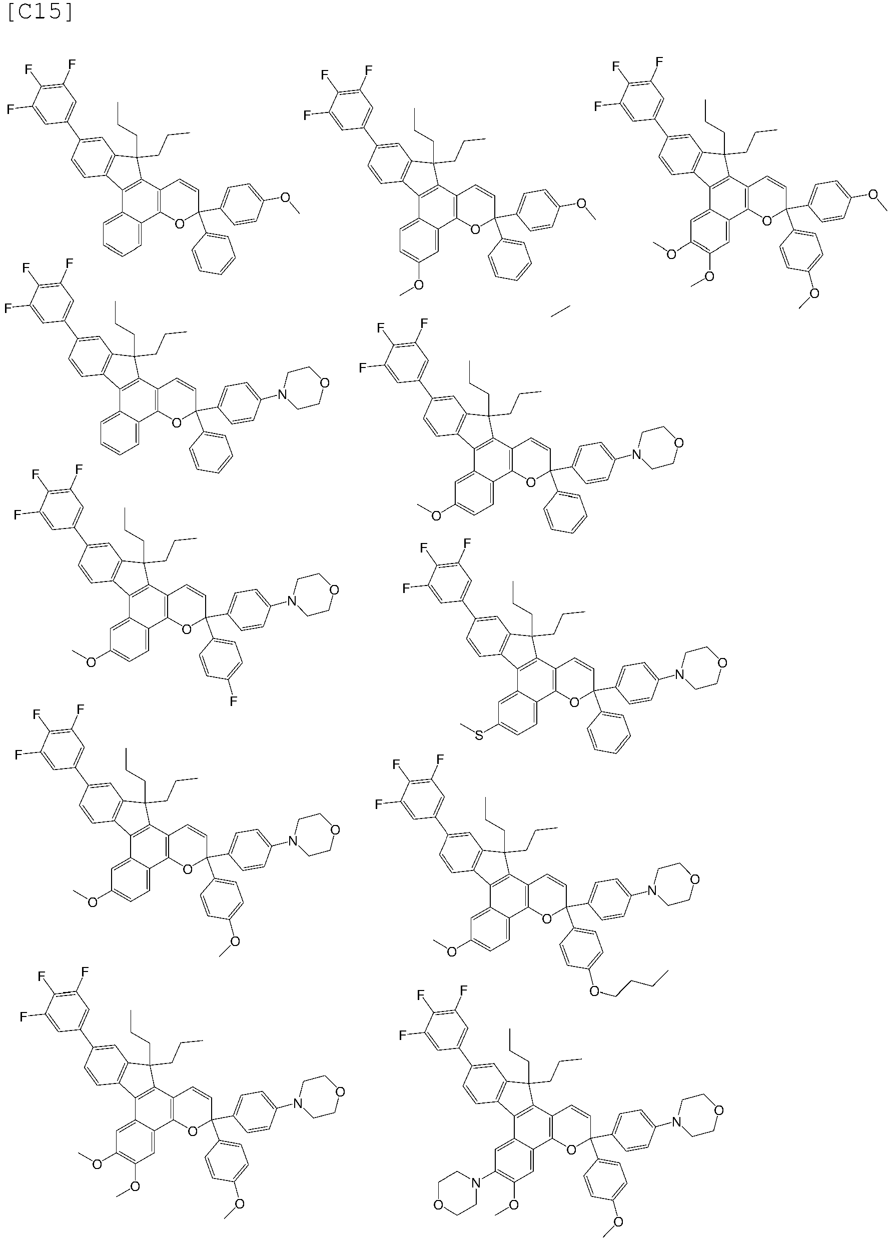

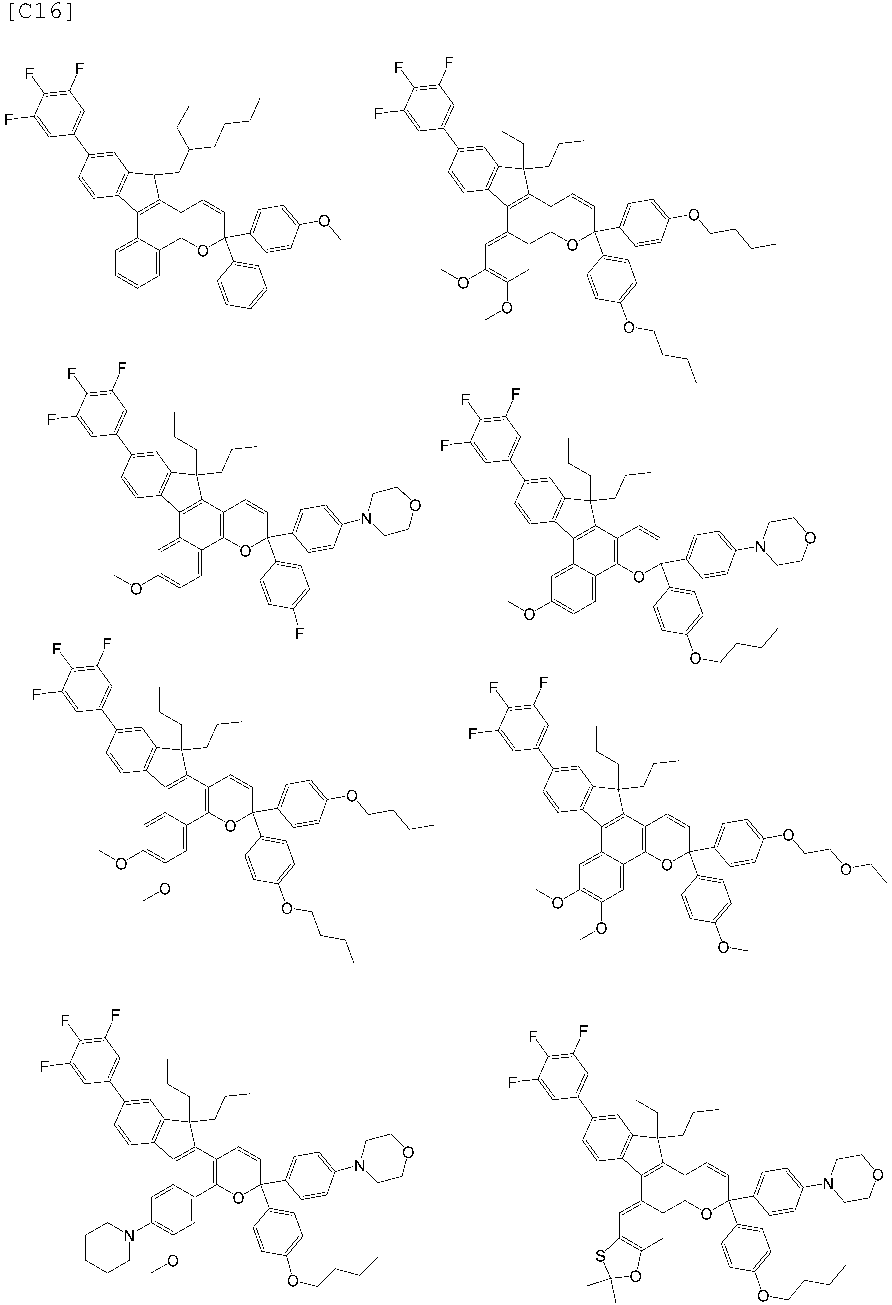

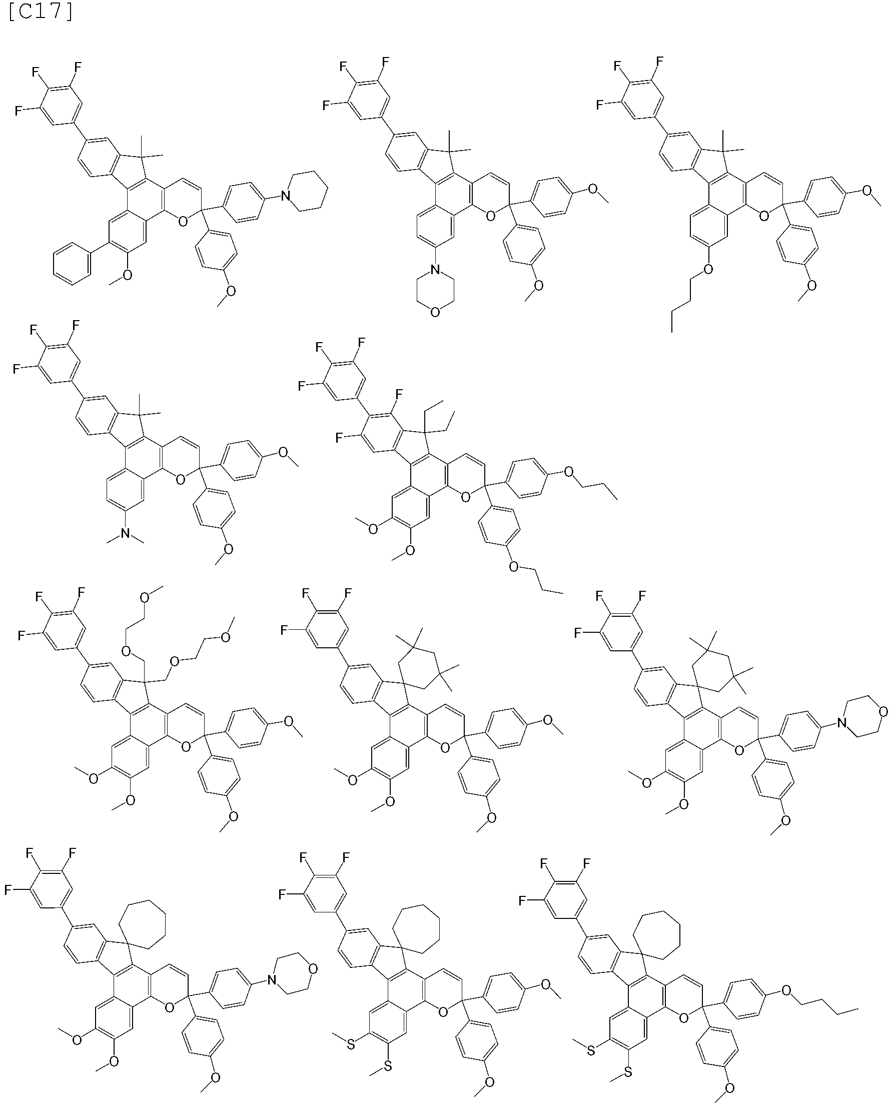

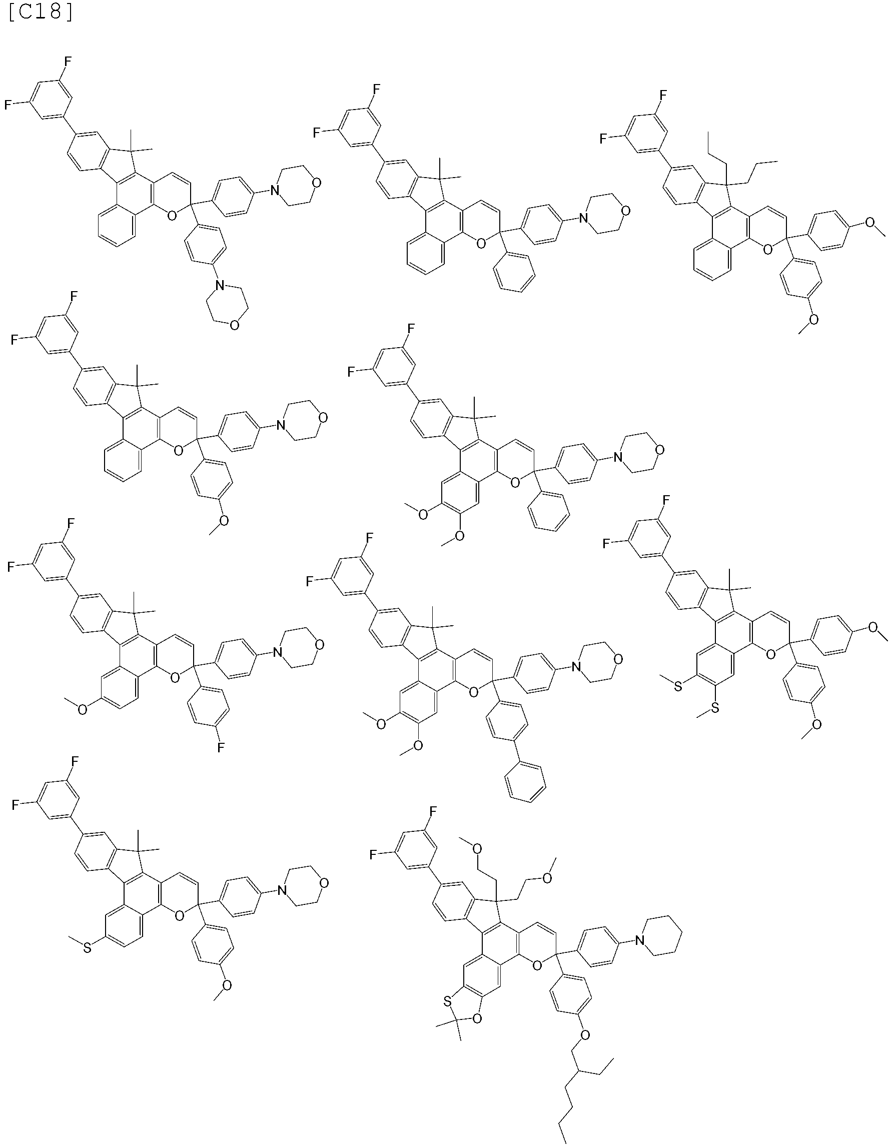

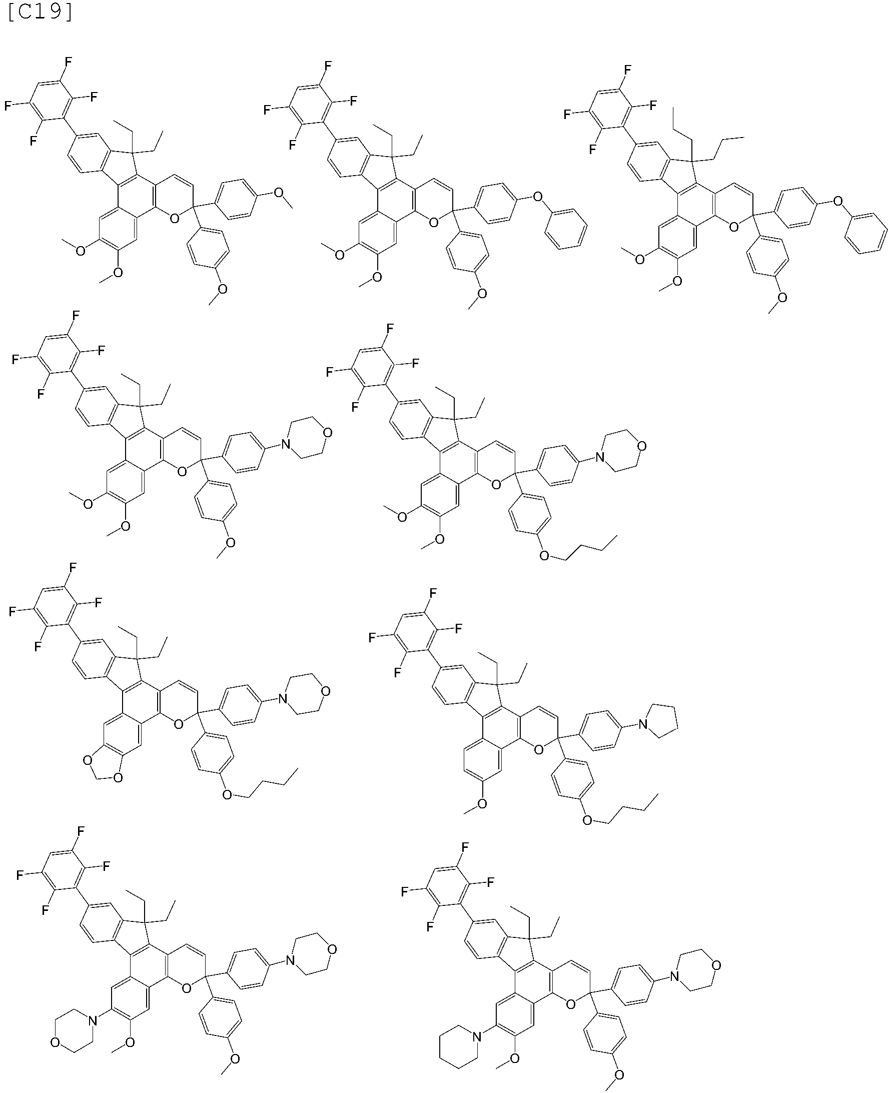

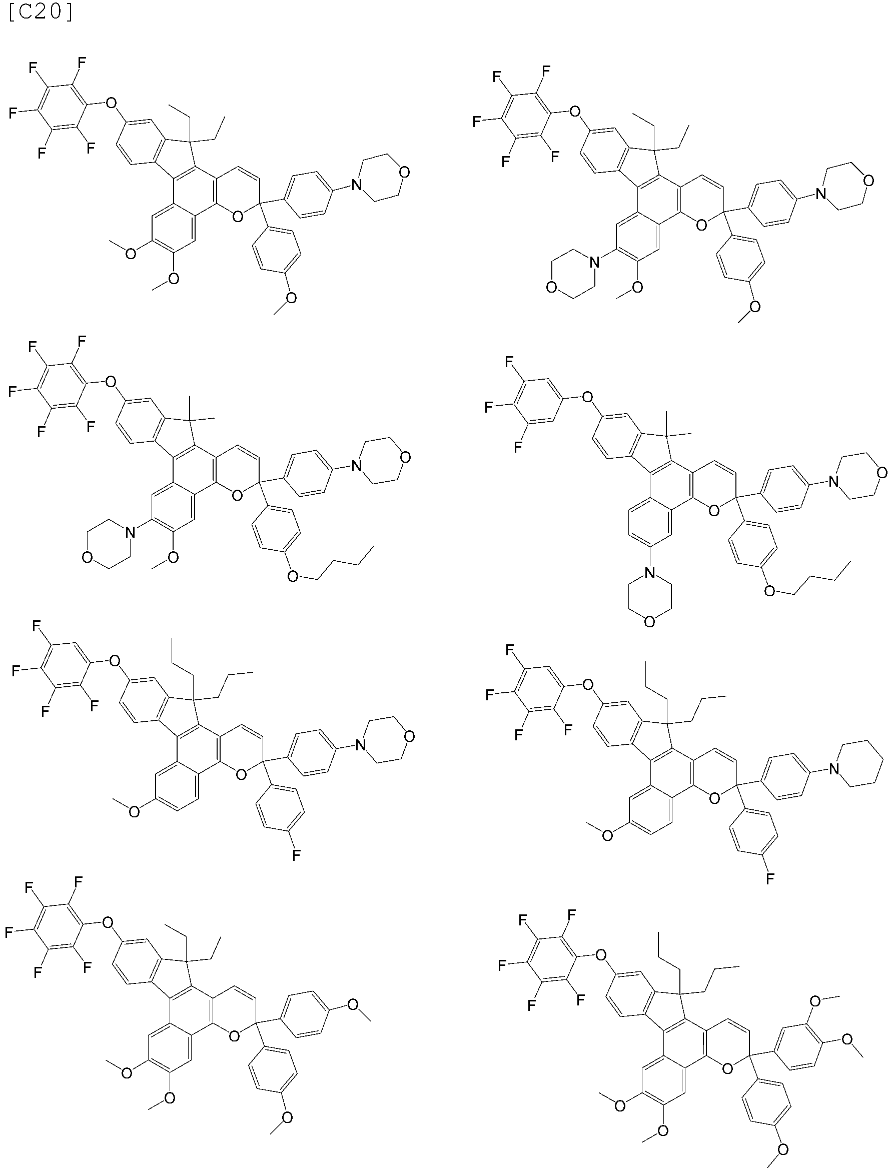

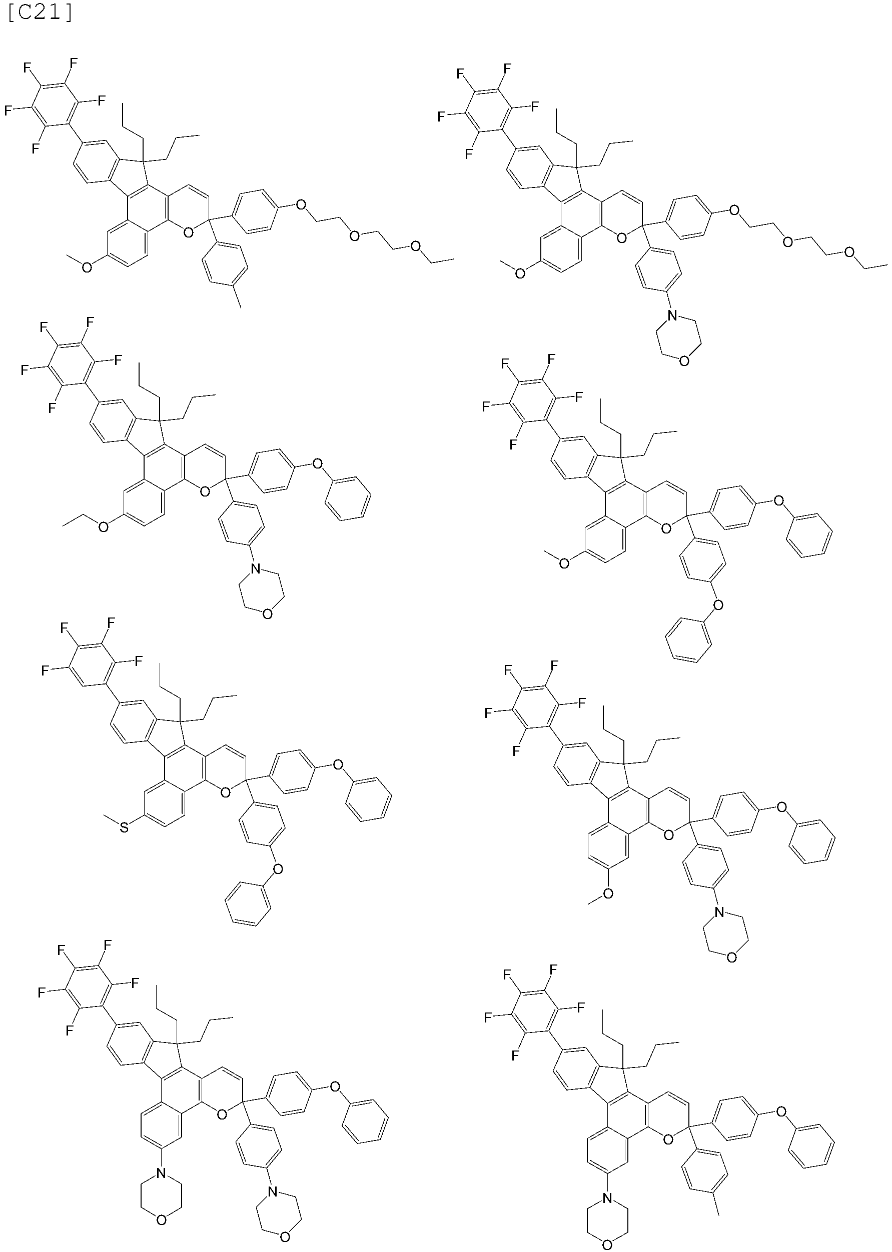

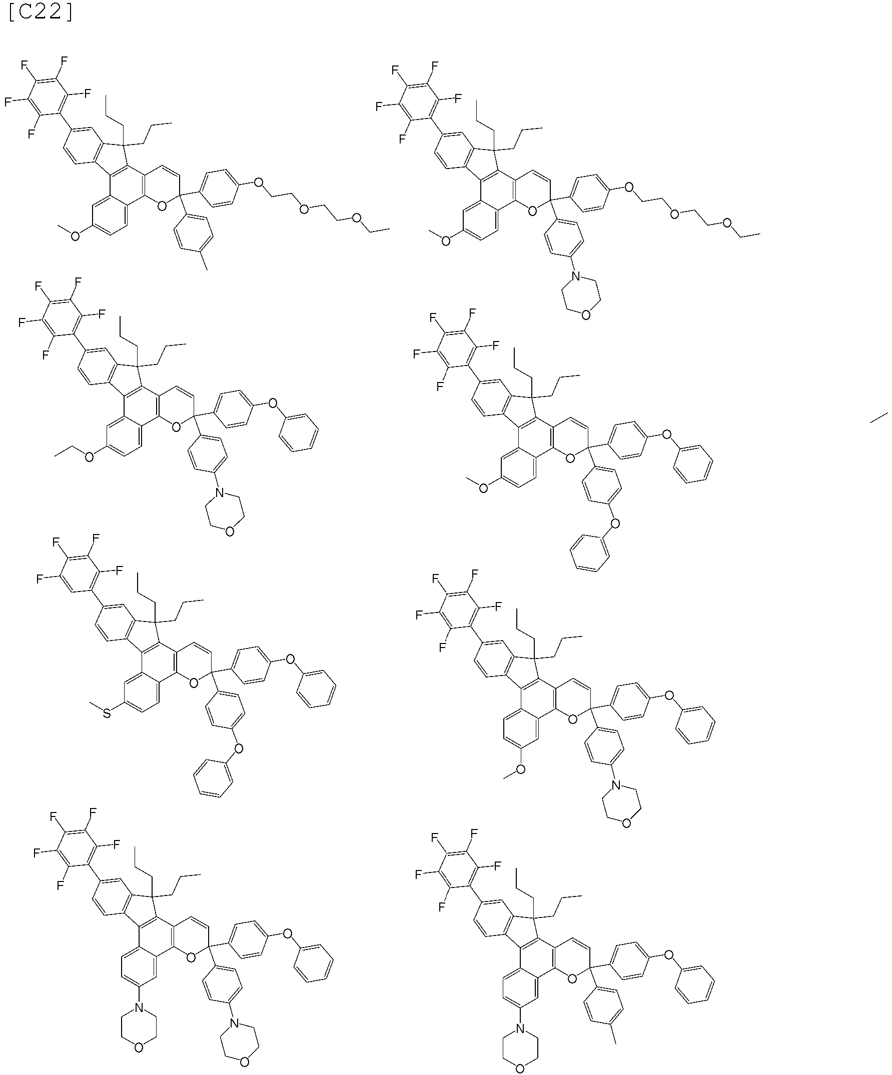

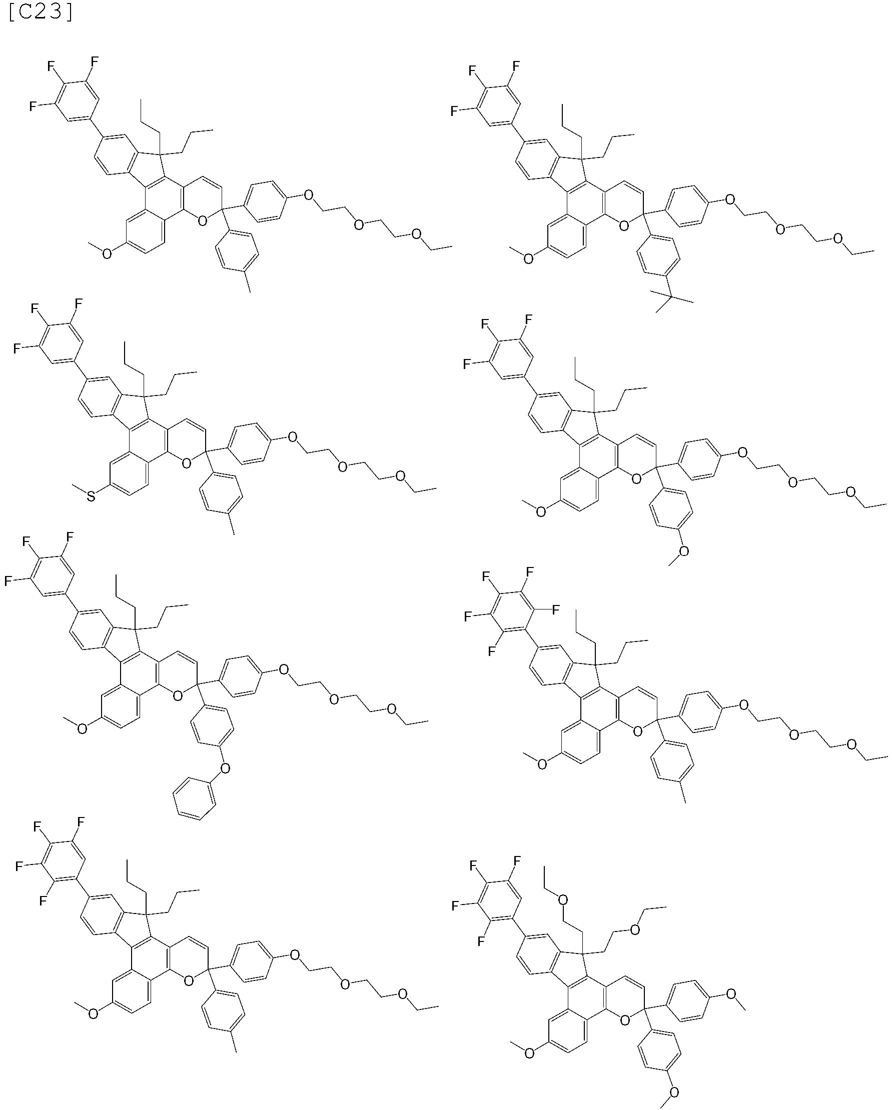

The photochromic compound represented by General Formula 1 may be synthesized by a known method. For the synthesis method, for example, reference may be made to the following documents. Japanese Patent No. 4884578, Japanese Patent Application Publication No. 2011-57581, US 2006/0226402 A1, US 2006/0228557 A1, US 2008/0103301 A1, US 2011/0108781 A1, US 2011/0108781 A1, U.S. Patent Specification No. 7527754, U.S. Patent Specification No. 7556751, WO 2001/60811 A1, WO 2013/086248 A1, WO 1996/014596 A1, WO 2001/019813 A1, WO 2001/60811, WO 2006/110221, WO 2009/136668, WO 2010/150905, WO 2011/010744, WO 2011/016582, WO 2011/025056, WO 2011/034202, WO 2012/102409, and WO 2023/136213.

### [Photochromic Composition and Photochromic Article]

One aspect of the present invention relates to a photochromic composition containing at least one photochromic compound represented by General Formula 1.

In addition, one aspect of the present invention relates to a photochromic article containing at least one photochromic compound represented by General Formula 1.

The photochromic composition and the photochromic article may contain only one photochromic compound represented by General Formula 1, or may contain two or more (for example, two or more and four or less) photochromic compounds represented by General Formula 1. The photochromic article and the photochromic composition may contain, for example, approximately 0.1 to 15.0 mass% of photochromic compounds represented by General Formula 1 relative to the total amount of 100 mass% of the photochromic article or the photochromic composition. However, the present invention is not limited to the above range.

The photochromic composition and the photochromic article may contain at least one photochromic compound represented by General Formula 1 and at least one other photochromic compound. The other photochromic compounds will be described below.

The photochromic article may have at least a substrate. In one embodiment, the photochromic compound represented by General Formula 1 may be contained in the substrate of the photochromic article. The photochromic article may have a substrate and a photochromic layer, and the substrate and/or the photochromic layer may contain at least one photochromic compound represented by General Formula 1. In the substrate and the photochromic layer, the photochromic compound represented by General Formula 1 may be contained only in the substrate in one embodiment, and the photochromic compound may be contained only in the photochromic layer in another embodiment. In still another embodiment, the photochromic compound may be contained in both the substrate and the photochromic layer. In addition, the substrate and the photochromic layer may contain, as a photochromic compound, only the photochromic compound represented by General Formula 1 or may contain at least one other photochromic compound. Examples of other photochromic compounds may include azobenzenes, spiropyrans, spirooxazines, naphthopyrans, indenonaphthopyrans, phenanthropyrans, hexaarylbisimidazoles, donor-acceptor Stenhouse adducts (DASAs), salicylidene anilines, dihydropyrenes, anthracene dimers, fulgides, diarylethenes, phenoxynaphthacenequinones, stilbenes, and the like. In addition, examples of other photochromic compounds may also include at least one selected from the group consisting of a photochromic compound represented by General Formula A, a photochromic compound represented by General Formula B, and a photochromic compound represented by General Formula C, which are described in WO 2022/138966.

### <Substrate>

The photochromic article may contain a substrate selected according to the type of the photochromic article. Examples of substrates may include spectacle lens substrates, such as a plastic lens substrate and a glass lens substrate. The glass lens substrate may be, for example, a lens substrate made of inorganic glass. Examples of plastic lens substrates may include a (meth)acrylic resin, a styrene resin, a polycarbonate resin, an allyl resin, an allyl carbonate resin, such as a diethylene glycol bisallyl carbonate resin (CR-39), a vinyl resin, a polyester resin, a polyether resin, a urethane resin obtained by the reaction between an isocyanate compound and a hydroxy compound, such as diethylene glycol, a thiourethane resin obtained by the reaction between an isocyanate compound and a polythiol compound, and a cured product (generally referred to as a transparent resin) obtained by curing a curable composition containing a (thio)epoxy compound having at least one disulfide bond in the molecule. As lens substrates, an unstained substrate (colorless lenses) may be used, or a stained substrate (stained lenses) may be used. The refractive index of a lens substrate may be, for example, approximately 1.50 to 1.75. However, the refractive index of the lens substrate is not limited to the range described above, and may be within, above, or below the range described above. Here, the refractive index shall refer to a refractive index for light having a wavelength of 500 nm. In addition, the lens substrate may be a lens with refractive power (so-called prescription lens) or a lens without refractive power (so-called non-prescription lens).

For example, the photochromic composition may be a polymerizable composition. In the present invention and this specification, the term "polymerizable composition" refers to a composition containing at least one polymerizable compound. A polymerizable composition at least containing at least one photochromic compound represented by General Formula 1 and at least one polymerizable compound may be molded by a known molding method to produce a cured product of such a polymerizable composition. Such a cured product may be included as a substrate in the photochromic article and/or may be included as a photochromic layer. The curing may be performed by irradiation with light and/or a heat treatment. The term "polymerizable compound" refers to a compound having a polymerizable group, and as the polymerization reaction of the polymerizable compound proceeds, the polymerizable composition may be cured to form a cured product. The polymerizable composition may further contain at least one additive (for example, a polymerization initiator and the like).

The spectacle lenses may be various lenses, such as a single focus lens, a multifocal lens, and a progressive power lens. The type of the lens is determined by the surface shape of each opposite side of the lens substrate. In addition, the surface of the lens substrate may be any of a convex surface, a concave surface, or a flat surface. In a general lens substrate and spectacle lens, the object-side surface is a convex surface, and the eyeball-side surface is a concave surface. However, the present invention is not limited thereto. Generally, the photochromic layer may be provided on the object-side surface of the lens substrate, but may be provided on the eyeball-side surface.

### <Photochromic Layer>

The photochromic layer may be a layer that is directly provided on the surface of the substrate or indirectly provided via at least one other layer. The photochromic layer may be, for example, a cured layer obtained by curing a polymerizable composition. A photochromic layer may be formed as a cured layer obtained by curing a polymerizable composition containing at least one photochromic compound represented by General Formula 1 and at least one polymerizable compound. For example, such a polymerizable composition is directly applied to the surface of the substrate or applied to the surface of a layer provided on the substrate, and the applied polymerizable composition is cured, thereby forming a photochromic layer as a cured layer containing at least one photochromic compound represented by General Formula 1. As the application method, known coating methods, such as a spin coating method, a dip coating method, a spray coating method, an inkjet method, a nozzle coating method, and a slit coating method may be used. The curing may be performed by irradiation with light and/or a heat treatment. The polymerizable composition may further contain at least one additive (for example, a polymerization initiator) in addition to at least one polymerizable compound. As the polymerization reaction of the polymerizable compound proceeds, the polymerizable composition can be cured to form a cured layer.

The thickness of the photochromic layer may be, for example, 5 µm or more, 10 µm or more, or 20 µm or more, and may be, for example, 80 µm or less, 70 µm or less or 50 µm or less.

### <Polymerizable Compound>

In the present invention and this specification, the term "polymerizable compound" shall refer to a compound having at least one polymerizable group in one molecule, and the term "polymerizable group" shall refer to a reactive group that can undergo a polymerization reaction. Examples of polymerizable groups may include an acryloyl group, a methacryloyl group, a vinyl group, a vinyl ether group, an epoxy group, a thiol group, an oxetane group, a hydroxy group, a carboxy group, an amino group, and an isocyanate group.

Examples of polymerizable compounds that can be used to form the above substrate and the above photochromic layer may include the following compounds.

### (Episulfide Compound)

The episulfide compound is a compound having two or more episulfide groups in one molecule. The episulfide group is a polymerizable group that can undergo ring-opening polymerization. Specific examples of episulfide compounds may include bis(1,2-epithioethyl)sulfide, bis(1,2-epithioethyl)disulfide, bis(2,3-epithiopropyl)sulfide, bis(2,3-epithiopropylthio)methane, bis(2,3-epithiopropyl)disulfide, bis(2,3-epithiopropyldithio)methane, bis(2,3-epithiopropyldithio)ethane, bis(6,7-epithio-3,4-dithiaheptyl)sulfide, bis(6,7-epithio-3,4-dithiaheptyl)disulfide, 1,4-dithiane-2,5-bis(2,3-epithiopropyldithiomethyl), 1,3-bis(2,3-epithiopropyldithiomethyl)benzene, 1,6-bis(2,3-epithiopropyldithiomethyl)-2-(2,3-epithiopropyldithioethylthio)-4-thiahexane, 1,2,3-tris(2,3-epithiopropyldithio)propane, 1,1,1,1-tetrakis(2,3-epithiopropyldithiomethyl)methane, 1,3-bis(2,3-epithiopropyldithio)-2-thiapropane, 1,4-bis(2,3-epithiopropyldithio)-2,3-dithiabutane, 1,1,1-tris(2,3-epithiopropyldithio)methane, 1,1,1-tris(2,3-epithiopropyldithiomethylthio)methane, 1,1,2,2-tetrakis(2,3-epithiopropyldithio)ethane, 1,1,2,2-tetrakis(2,3-epithiopropyldithiomethylthio)ethane, 1,1,3,3-tetrakis(2,3-epithiopropyldithio)propane, 1,1,3,3-tetrakis(2,3-epithiopropyldithiomethylthio)propane, 2-[1,1-bis(2,3-epithiopropyldithio)methyl]-1,3-dithietane, 2-[1,1-bis(2,3-epithiopropyldithiomethylthio)methyl]-1,3-dithietane, and the like.

### (Thietanyl Compound)

A thietanyl compound is a thietane compound having two or more thietanyl groups in one molecule. A thietanyl group is a polymerizable group that can undergo ring-opening polymerization. Some thietanyl compounds have an episulfide group together with a plurality of thietanyl groups. Such compounds are listed as examples of the episulfide compounds described above. Other thietanyl compounds include metal-containing thietane compounds having metal atoms in the molecule and non-metallic thietane compounds that contain no metal.

Specific examples of non-metallic thietane compounds may include bis(3-thietanyl)disulfide, bis(3-thietanyl)sulfide, bis(3-thietanyl)trisulfide, bis(3-thietanyl)tetrasulfide, 1,4-bis(3-thietanyl)-1,3,4-trithiabutane, 1,5-bis(3-thietanyl)-1,2,4,5-tetrathiapentane, 1,6-bis(3-thietanyl)-1,3,4,6-tetrathiahexane, 1,6-bis(3-thietanyl)-1,3,5,6-tetrathiahexane, 1,7-bis(3-thietanyl)-1,2,4,5,7-pentathiaheptane, 1,7-bis(3-thietanylthio)-1,2,4,6,7-pentathiaheptane, 1,1-bis(3-thietanylthio)methane, 1,2-bis(3-thietanylthio)ethane, 1,2,3-tris(3-thietanylthio)propane, 1,8-bis(3-thietanylthio)-4-(3-thietanylthiomethyl)-3,6-dithiaoctane, 1,11-bis(3-thietanylthio)-4,8-bis(3-thietanylthiomethyl)-3,6,9-trithiaundecane, 1,11-bis(3-thietanylthio)-4,7-bis(3-thietanylthiomethyl)-3,6,9-trithiaundecane, 1,11-bis(3-thietanylthio)-5,7-bis(3-thietanylthiomethyl)-3,6,9-trithiaundecane, 2,5-bis(3-thietanylthiomethyl)-1,4-dithiane, 2,5-bis[[2-(3-thietanylthio)ethyl]thiomethyl]-1,4-dithiane, 2,5-bis(3-thietanylthiomethyl)-2,5-dimethyl-1,4-dithiane, bisthietanylsulfide, bis(thietanylthio)methane, 3-[<(thietanylthio)methylthio>methylthio]thietane, bisthietanyldisulfide, bisthietanyltrisulfide, bisthietanyltetrasulfide, bisthietanylpentasulfide, 1,4-bis(3-thietanyldithio)-2,3-dithiabutane, 1,1,1-tris(3-thietanyldithio)methane, 1,1,1-tris(3-thietanyldithiomethylthio)methane, 1,1,2,2-tetrakis(3-thietanyldithio)ethane, 1,1,2,2-tetrakis(3-thietanyldithiomethylthio)ethane, and the like.

Examples of metal-containing thietane compounds may include those containing Group 14 atoms, such as an Sn atom, a Si atom, a Ge atom, and a Pb atom, Group 4 elements, such as a Zr atom and a Ti atom, Group 13 atoms, such as an Al atom, and Group 12 atoms, such as an Zn atom, as metal atoms in the molecule. Specific examples thereof may include an alkylthio(thietanylthio)tin, a bis(alkylthio)bis(thietanylthio)tin, an alkylthio(alkylthio)bis(thietanylthio)tin, a bis(thietanylthio) cyclic dithiotin compound, an alkyl(thietanylthio)tin compound, and the like.

Specific examples of alkylthio(thietanylthio)tins may include methylthiotris(thietanylthio)tin, ethylthiotris(thietanylthio)tin, propylthiotris(thietanylthio)tin, isopropylthiotris(thietanylthio)tin, and the like.

Specific examples of bis(alkylthio)bis(thietanylthio)tins may include bis(methylthio)bis(thietanylthio)tin, bis(ethylthio)bis(thietanylthio)tin, bis(propylthio)bis(thietanylthio)tin, bis(isopropylthio)bis(thietanylthio)tin, and the like.

Specific examples of alkylthio(alkylthio)bis(thietanylthio)tins may include ethylthio(methylthio)bis(thietanylthio)tin, methylthio(propylthio)bis(thietanylthio)tin, isopropylthio(methylthio)bis(thietanylthio)tin, ethylthio(propylthio)bis(thietanylthio)tin, ethylthio(isopropylthio)bis(thietanylthio)tin, isopropylthio(propylthio)bis(thietanylthio)tin, and the like.

Specific examples of bis(thietanylthio) cyclic dithiotin compounds may include bis(thietanylthio)dithiastannetane, bis(thietanylthio)dithiastannolane, bis(thietanylthio)dithiastanninane, bis(thietanylthio)trithiastannocane, and the like.

Specific examples of alkyl(thietanylthio)tin compounds may include methyltris(thietanylthio)tin, dimethyl bis(thietanylthio)tin, butyltris(thietanylthio)tin, tetrakis(thietanylthio)tin, and the like.

### (Polyamine Compound)

The polyamine compound is a compound having two or more NH₂ groups in one molecule, and can form a urea bond through a reaction with a polyisocyanate and can form a thiourea bond through a reaction with a polyisothiocyanate. Specific examples of polyamine compounds may include ethylenediamine, hexamethylenediamine, isophoronediamine, nonamethylenediamine, undecamethylenediamine, dodecamethylenediamine, metaxylenediamine, 1,3-propanediamine, putrescine, 2-(2-aminoethylamino)ethanol, diethylenetriamine, p-phenylenediamine, m-phenylenediamine, melamine, 1,3,5-benzenetriamine, and the like.

### (Epoxy-based Compound)

The epoxy-based compound is a compound having an epoxy group in the molecule. The epoxy group is a polymerizable group that can undergo ring-opening polymerization. The epoxy compounds are generally classified into aliphatic epoxy compounds, alicyclic epoxy compounds, and aromatic epoxy compounds.

Specific examples of aliphatic epoxy compounds may include ethylene oxide, 2-ethyloxirane, butyl glycidyl ether, phenyl glycidyl ether, 2,2'-methylenebisoxirane, 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, trimethylolpropane triglycidyl ether, glycerol triglycidyl ether, diglycerol tetraglycidyl ether, pentaerythritol tetraglycidyl ether, tris(2-hydroxyethyl)isocyanurate triglycidyl ether, and the like.

Specific examples of alicyclic epoxy compounds may include isophorone diol diglycidyl ether, bis-2,2-hydroxycyclohexylpropane diglycidyl ether, and the like.

Specific examples of aromatic epoxy compounds may include resorcine diglycidyl ether, bisphenol A diglycidyl ether, bisphenol F diglycidyl ether, bisphenol S diglycidyl ether, orthophthalic acid diglycidyl ester, phenol novolac polyglycidyl ether, cresol novolac polyglycidyl ether, and the like.

In addition to the above examples, an epoxy compound having a sulfur atom in the molecule together with an epoxy group may be used. Such sulfur atom-containing epoxy compounds include linear aliphatic compounds and cycloaliphatic compounds.

Specific examples of linear aliphatic sulfur atom-containing epoxy compounds may include bis(2,3-epoxypropyl)sulfide, bis(2,3-epoxypropyl)disulfide, bis(2,3-epoxypropylthio)methane, 1,2-bis(2,3-epoxypropylthio)ethane, 1,2-bis(2,3-epoxypropylthio)propane, 1,3-bis(2,3-epoxypropylthio)propane, 1,3-bis(2,3-epoxypropylthio)-2-methylpropane, 1,4-bis(2,3-epoxypropylthio)butane, 1,4-bis(2,3-epoxypropylthio)-2-methylbutane, 1,3-bis(2,3-epoxypropylthio)butane, 1,5-bis(2,3-epoxypropylthio)pentane, 1,5-bis(2,3-epoxypropylthio)-2-methylpentane, 1,5-bis(2,3-epoxypropylthio)-3-thiapentane, 1,6-bis(2,3-epoxypropylthio)hexane, 1,6-bis(2,3-epoxypropylthio)-2-methylhexane, 3,8-bis(2,3-epoxypropylthio)-3,6-dithiaoctane, 1,2,3-tris(2,3-epoxypropylthio)propane, 2,2-bis(2,3-epoxypropylthio)-1,3-bis(2,3-epoxypropylthiomethyl)propane, 2,2-bis(2,3-epoxypropylthiomethyl)-1-(2,3-epoxypropylthio)butane, and the like.

Specific examples of cyclic aliphatic sulfur atom-containing epoxy compounds may include 1,3-bis(2,3-epoxypropylthio)cyclohexane, 1,4-bis(2,3-epoxypropylthio)cyclohexane, 1,3-bis(2,3-epoxypropylthiomethyl)cyclohexane, 1,4-bis(2,3-epoxypropylthiomethyl)cyclohexane, 2,5-bis(2,3-epoxypropylthiomethyl)-1,4-dithiane, 2,5-bis[<2-(2,3-epoxypropylthio)ethyl>thiomethyl]-1,4-dithiane, 2,5-bis(2,3-epoxypropylthiomethyl)-2,5-dimethyl-1,4-dithiane, and the like.

### (Compound Having Radically Polymerizable Group)

The radically polymerizable group is a polymerizable group that can undergo radical polymerization. Examples of radically polymerizable groups may include an acryloyl group, a methacryloyl group, an allyl group, a vinyl group, and the like.

Hereinafter, a compound having a polymerizable group selected from a group consisting of an acryloyl group and a methacryloyl group will be referred to as a "(meth)acrylate compound". Specific examples of (meth)acrylate compounds may include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, neopentyl glycol di(meth)acrylate, ethylene glycol bisglycidyl(meth)acrylate, bisphenol A di(meth)acrylate, 2,2-bis(4-(meth)acroxyethoxyphenyl)propane, 2,2-bis(4-(meth)acroxydiethoxyphenyl)propane, 2,2-bis(4-(meth)acryloyloxyethoxyphenyl)propane, 2,2-bis(3,5-dibromo-4-(meth)acryloyloxyethoxyphenyl)propane, 2,2-bis(4-(meth)acryloyloxydipropoxyphenyl)propane, bispheno-F di(meth)acrylate, 1,1-bis(4-(meth)acroxyethoxyphenyl)methane, 1,1-bis(4-(meth)acroxydiethoxyphenyl)methane, dimethyloltricyclodecane di(meth)acrylate, trimethylolpropane tri(meth)acrylate, ditrimethylolpropane tetra(meth)acrylate, glycerol di(meth)acrylate, pentaerythritol tri(meth)acrylate, pentaerythritol tetra(meth)acrylate, methyl thio(meth)acrylate, phenyl thio(meth)acrylate, benzyl thio(meth)acrylate, xylylenedithiol di(meth)acrylate, mercaptoethyl sulfide di(meth)acrylate, bifunctional urethane (meth)acrylate, and the like.

Specific examples of compounds having an allyl group (allyl compounds) may include allyl glycidyl ether, diallyl phthalate, diallyl terephthalate, diallyl isophthalate, diallyl carbonate, diethylene glycol bis(allyl carbonate), methoxypolyethylene glycol allyl ether, polyethylene glycol allyl ether, methoxypolyethyleneglycol-polypropylene glycol allyl ether, butoxy polyethylene glycol-polypropylene glycol allyl ether, methacryloyloxy polyethylene glycol-polypropylene glycol allyl ether, phenoxy polyethylene glycol allyl ether, methacryloyloxy polyethylene glycol allyl ether, and the like.

Examples of compounds having a vinyl group (vinyl compounds) may include α-methylstyrene, an α-methylstyrene dimer, styrene, chlorostyrene, methylstyrene, bromostyrene, dibromostyrene, divinylbenzene, 3,9-divinylspirobi(m-dioxane), and the like.

The photochromic article may include, at any position, at least one layer known as a functional layer for the photochromic article, such as a protective layer for improving the durability of the photochromic article, an anti-reflection layer, a water-repellent or hydrophilic anti-fouling layer, an anti-fogging layer, and a primer layer for improving adhesion between layers.

The photochromic article may be an optical article. One form of the optical article is a spectacle lens. Such a spectacle lens may also be called a photochromic lens or a photochromic spectacle lens. In addition, as one form of the optical article, a goggle lens, a visor (bill) part of a sun visor, a shield component of a helmet, and the like may be exemplified. An optical article with anti-glare functionality may be produced by applying the photochromic composition, which is a polymerizable composition, onto a substrate for these optical articles and curing the applied composition to form a photochromic layer.

### [Spectacles]

One aspect of the present invention relates to spectacles having a spectacle lens that is one form of the photochromic article. Details of the spectacle lens included in the spectacles are as described previously. By providing such a spectacle lens, for example, the spectacles can exhibit an anti-glare effect like sunglasses when the photochromic compound is colored upon irradiation with sunlight outdoors, and the photochromic compound can fade upon returning indoors, thereby recovering the transmittance. For the spectacles, a known technology may be applied to the configuration of the frame or the like.

### Examples

Hereinafter, the present invention will be described in more detail referring to Examples. However, the present invention is not limited to the embodiments shown in Examples.

In the following, the molecular structure was identified using a nuclear magnetic resonance device (NMR). Proton NMR of ECS-400 (commercially available from JEOL Ltd.) was used for NMR. As a measurement solvent, deuterohloroform was mainly used, and deuterated dimethylsulfoxide, deuterated acetone, deuterated acetonitrile, deuterated benzene, deuterated methanol, deuterated pyridine, or the like was appropriately used only when the sample was poorly soluble in deuterochloroform.

The purity was analyzed using high-performance liquid chromatography (HPLC). LC-2040C (manufactured by Shimadzu Corporation) was used for HPLC. YMC-Triart C18 was used for the column, and the measurement temperature was set to 40°C. For the mobile phase, a mixed solvent of water containing 0.1% of trifluoroacetic acid and acetonitrile was used, and the flow rate was 0.4 mL/min.

For mass spectrometry, a device equipped with SQD2 was used as a mass spectrometry unit in the ACQUITY UPLC H-Class system (UPLC) (manufactured by Nihon Waters K.K.). ACQUITY UPLC BEH C18 was used as the column, and the measurement temperature was set to 40°C. For the mobile phase, a mixed solvent of water containing formic acid and acetonitrile was used, a concentration gradient was applied, and the mobile phase was flown at a flow rate of 0.61 mL/min for flowing. An electrospray ionization (ESI) method was used for ionization.

CHN (Carbon-Hydrogen-Nitrogen) elemental analysis was performed by a combustion method. As the measurement device, vario MICRO cube (manufactured by Elementar Analysensysteme GmbH) was used. The temperature was set to 1150°C for the combustion furnace and 850°C for a reduction furnace. The helium flow rate was set to 200 ml/min, and the oxygen flow rate was set to 25 to 30 mL/min.

### [Example 1]

From the reaction product shown in the following tables, the products shown in the following tables were obtained by the following method.

Under an argon atmosphere, p-toluenesulfonic acid monohydrate (0.15 g, 0.80 mmol) was added to a toluene solution (36 mL) containing Reaction Material A (1.9 g, 4 mmol) and Reaction Material B (2.6 g, 8 mmol) shown in the following tables, and the mixture was stirred at room temperature overnight. An aqueous sodium hydroxide solution (1.0 M, 37 mL) was added thereto, and the mixture was stirred for about 20 minutes. Impurities were removed by filtration, the reaction product was extracted with toluene (30 mL ×2), the combined organic layer was then washed with water (20 mL ×2) and concentrated. The obtained residue was purified through column chromatography (SiO₂: 200 g, heptane/chloroform (volume basis) = 70/30 to 60/40) (1.0 g, brown solid). The resulting solid was suspended in heptane/ethyl acetate (2/1 (volume basis), 90 mL), subjected to an ultrasonic treatment for about 30 minutes, and filtered. The filtered solid was dried for 8 hours in a vacuum oven at 105°C to obtain products listed in the following tables as the final product as a light blue solid (0.8 g).

The obtained products were analyzed by the following method.

The structure was identified by a nuclear magnetic resonance (NMR) device.

Analysis of purity using HPLC found a value shown in the following table in terms of area ratio.

As a result of mass spectrometry, the measured value ([M+H]⁺, relative intensity 100) was obtained as the value shown in the following table against the calculated value of the exact mass shown in the following table.

As a result of CHN elemental analysis by a combustion method, the measured value was obtained as the value shown in the following table against the calculated value shown in the following table.

The above analysis results confirmed that compounds shown in the following table as desired compounds were obtained comprehensively.

### [Example 2 to 20 and Comparative Examples 1 to 3]

Compounds shown in the tables below were obtained by the same operation as above, except that reaction products shown in the tables below were used as Reaction Material A and Reaction Material B used to synthesize the compound represented by General Formula 1.

The obtained products were analyzed by the method described above. The analysis results are shown in the tables below.

### [Production of Spectacle Lens (Photochromic Article)]

### <Preparation of Photochromic Composition (Polymerizable Composition)>

In a plastic container, 68 parts by mass of polyethylene glycol diacrylate, 12 parts by mass of trimethylolpropane trimethacrylate, and 20 parts by mass of neopentyl glycol dimethacrylate were mixed in relation to the total amount of 100 parts by mass of (meth)acrylates to prepare a (meth)acrylate mixture. Each photochromic compound of Examples 1 to 20 was mixed with the resulting (meth)acrylate mixture such that the amount of the photochromic compound was 2.5 parts by mass in relation to 100 parts by mass of the (meth)acrylate mixture. In addition, a photopolymerization initiator (phenyl bis(2,4,6-trimethylbenzoyl)phosphine oxide), an antioxidant [bis(3-tert-butyl-4-hydroxy-5-methylphenyl)propionate)][ethylene bis(oxyethylene), and a light stabilizer (bis(1,2,2,6,6-pentamethyl-4-piperidyl) sebacate) were mixed and thoroughly stirred, and after that, a silane coupling agent (γ-methacryloxypropyltrimethoxysilane) was added dropwise while stirring. Then, defoaming was performed using an automatic revolution-type stirring and defoaming device.
A photochromic composition was prepared by the above method.

### <Formation of Primer Layer>

A plastic lens substrate (manufactured by HOYA, product name: EYAS, a center thickness: 2.5 mm, a diameter: 75 mm, spherical lens power: -4.00) was immersed in an aqueous sodium hydroxide solution having a concentration of 10 mass% (a liquid temperature of 60°C) for 5 minutes, washed with alkali and additionally washed with pure water, and dried. Then, a water-based polyurethane resin liquid (polycarbonate polyol-based polyurethane emulsion, viscosity: 100 cPs, solid content concentration: 38 mass%) was applied to the convex surface of the plastic lens substrate in an environment of room temperature and a relative humidity of 40% to 60% using a spin coater MS-B150 (manufactured by Mikasa Co., Ltd.) at a rotational speed of 1,500 rpm for 1 minute according to a spin coating method and then dried naturally for 15 minutes, whereby a primer layer having a thickness of 5.5 µm was formed.

### <Formation of Photochromic Layer>

The photochromic composition prepared as above was added dropwise onto the primer layer, and applied by a spin coating method using a program in which the rotational speed was changed in a slope mode from a rotational speed of 500 rpm to 1,500 rpm over 1 minute, and rotation was continued at 1,500 rpm for 5 seconds using MS-B150 (manufactured by Mikasa Co., Ltd.). Then, the photochromic composition applied on the primer layer formed on the plastic lens substrate was irradiated with ultraviolet light (with a dominant wavelength of 405 nm) in a nitrogen atmosphere (with an oxygen concentration of 500 ppm or less) for 40 seconds, and the composition was cured to form a photochromic layer. The thickness of the formed photochromic layer was 45 µm.

Accordingly, photochromic articles (spectacle lenses) containing each photochromic compound of Examples 1 to 20 were produced. It was confirmed that all spectacle lenses were colored when irradiated with ultraviolet light and returned to their original state before irradiation with ultraviolet light when the irradiation with ultraviolet light was stopped.

### [Evaluation of Fading Rate]

For each of Examples and Comparative Examples shown in tables shown below, each compound was dissolved in chloroform containing no stabilizer to prepare a chloroform solution containing the compound.
A 1 cm square quartz spectroscopic cell containing the prepared solution was covered, and irradiated with ultraviolet rays for 15 seconds using UV-LED (a combination of LIGHTNINGCURE LC-L1V5 and L14310-120, output: 70%), manufactured by Hamamatsu Photonics K.K., as the ultraviolet light source. The solution was stirred with a small stirrer during the irradiation with ultraviolet rays. Within 10 seconds after the irradiation with ultraviolet rays was completed, the absorbance was measured using a UV-visible spectrophotometer (UV-1900i manufactured by Shimadzu Corporation, measurement wavelength: 700 to 400 nm, wavelength increments: 2 nm, survey mode) to measure the absorbance. The absorbance was measured at room temperature (23°C to 28°C). The solution was prepared to have a concentration such that the absorbance at the first absorption wavelength (the peak of the absorption intensity observed at the longest wavelength) was 0.95 to 1.05. The absorbance was further measured every 10 seconds, and the attenuation of the absorbance was measured. The first absorption wavelength peak of the first absorbance measurement was normalized to 1, and the subsequent absorbance decay was measured. The data from the initial 100 seconds of color fading (11 absorbance measurements) were analyzed using a first-order reaction model based on the time-dependent absorbance change, and the reaction rate constant was determined. When [A₀] is taken as the initial concentration of the colored component, that is, the normalized absorbance value of 1, [A] is taken as the concentration of the colored form after the lapse of a certain time, that is, the normalized absorbance value, t is taken as the time (seconds), and k is taken as a rate constant, the first-order reaction can be expressed as in the following expression. [Math. 1] $ln \frac{\left[A\right]}{\left[{A}_{0}\right]} = - kt$

The tables below show the reaction rate constants obtained for Examples and Comparative Examples. The photochromic compound of Comparative Example 1 and the photochromic compound of Comparative Example 2 are the compounds subject to the PFAS regulation because these compounds contain a perfluoromethyl group. In contrast, the photochromic compounds of Examples 1 to 20 are not subject to the PFAS regulation because these compounds have no perfluoromethyl and perfluoromethylene groups. The results shown in the tables below confirmed that although the photochromic compounds of Examples 1 to 20 were not subject to the PFAS regulations, the photochromic compounds exhibited as fast fading rates as those of the photochromic compounds of Comparative Example 1 and the photochromic compounds of Comparative Example 2.

In addition, the above measurements confirmed that the photochromic compounds of Examples 1 to 20 exhibit photochromic performance, undergoing a structural transition to molecular structures with strong visible-light absorption upon UV irradiation.

**[Table 1-1]**

| | Reaction material A | Reaction material B | Product |
|---|---|---|---|
| Example 1 | 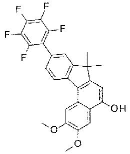 | 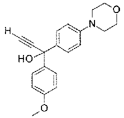 | 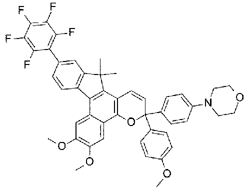 |
| Example 2 | 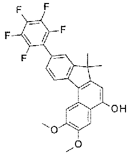 | 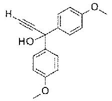 | 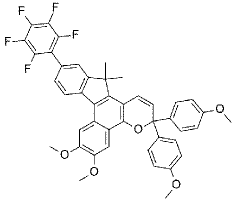 |
| Example 3 | 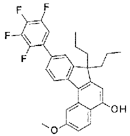 | 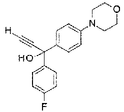 | 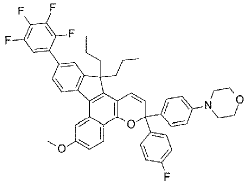 |
| Example 4 | 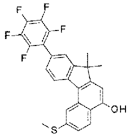 | 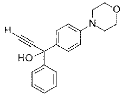 | 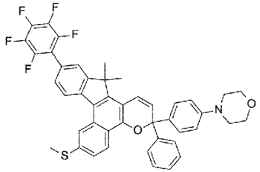 |
| Example 5 | 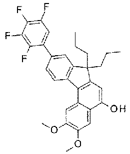 | 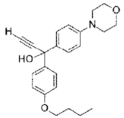 | 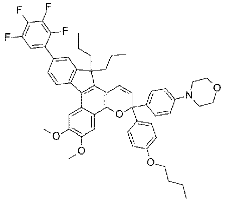 |

**[Table 1-2]**

| | Reaction material A | Reaction material B | Product |
|---|---|---|---|
| Example 6 | 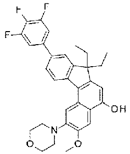 | 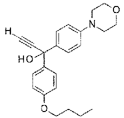 | 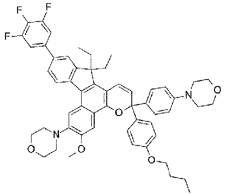 |
| Example 7 | 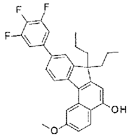 | 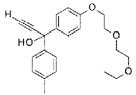 | 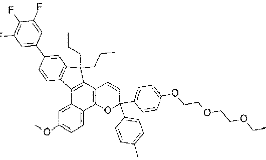 |
| Example 8 | 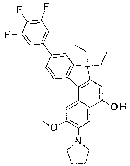 | 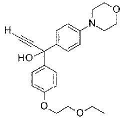 | 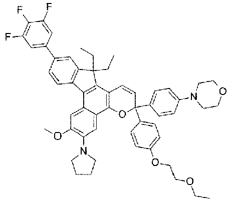 |
| Example 9 | 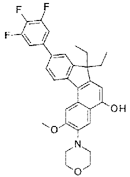 | 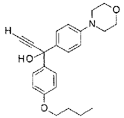 | 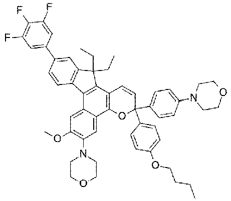 |
| Example 10 | 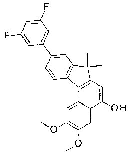 | 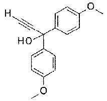 | 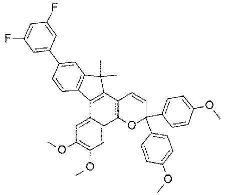 |

**[Table 1-3]**

| | Reaction material A | Reaction material B | Product |
|---|---|---|---|
| Example 11 | 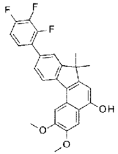 | 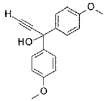 | 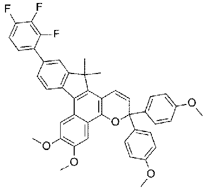 |
| Example 12 | 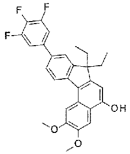 | 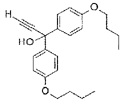 | 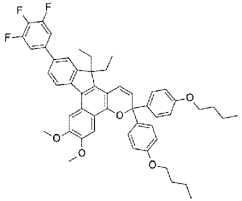 |
| Example 13 | 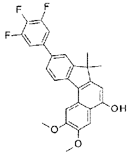 | 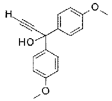 | 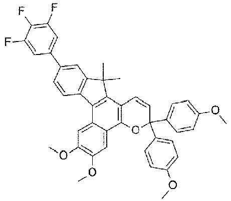 |
| Example 14 | 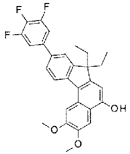 | 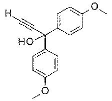 | 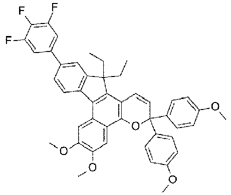 |
| Example 15 | 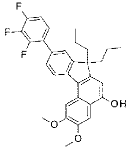 | 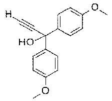 | 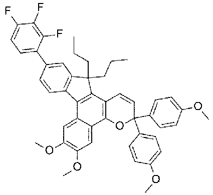 |

**[Table 1-4]**

| | Reaction material A | Reaction material B | Product |
|---|---|---|---|
| Example 16 | 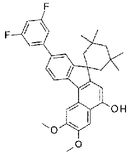 | 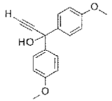 | 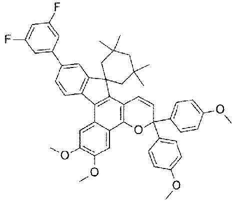 |
| Example 17 | 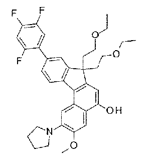 | 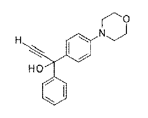 | 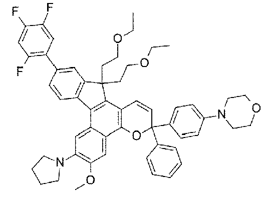 |
| Example 18 | 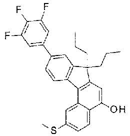 | 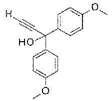 | 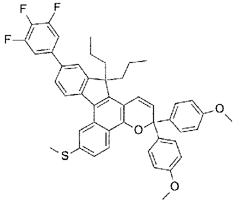 |
| Example 19 | 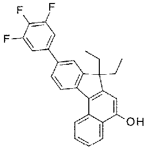 | 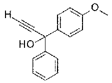 | 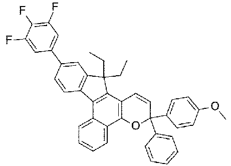 |
| Example 20 | 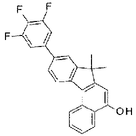 | 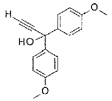 | 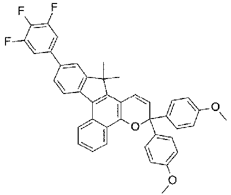 |

**[Table 1-5]**

| | Reaction material A | Reaction material B | Product |
|---|---|---|---|
| Comparative example 1 | 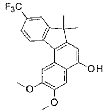 | 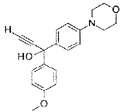 | 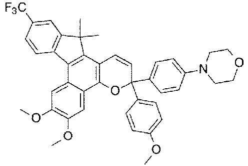 |
| Comparative example 2 | 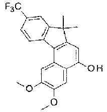 | 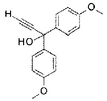 | 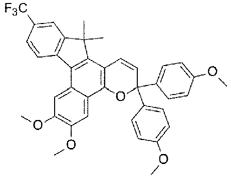 |
| Comparative example3 | 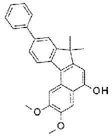 | 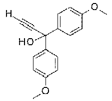 | 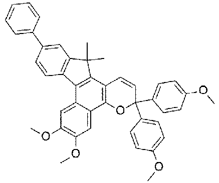 |

**[Table 2-1]**

| | HPLC purity (%) | Precision mass calculated value | Measured value (M+H) in mass spectrometry | Calculated value of CHN composition (%) | Measured value by CHN elemental analysis (%) | Reaction rate constant x 10⁻³ (s⁻¹) | PFAS regulation |
|---|---|---|---|---|---|---|---|
| Example 1 | 98% | 791.267 | 792.3 | C: 71.3% | C: 71.2% | 21 | Not subject |
| | | | | H: 4.8% | H: 4.6% | | |
| | | | | N: 1.8% | N: 1.8% | | |
| Example 2 | 98% | 736.225 | 737.2 | C: 71.7% | C: 72.0% | 11 | Not subject |
| | | | | H: 4.5% | H: 4.4% | | |
| Example 3 | 98% | 787.309 | 788.3 | C:74.7% | C:74.4% | 24 | Not subject |
| | | | | H:5.4% | H:5.4% | | |
| | | | | N:1.8% | N:1.6% | | |
| Example 4 | 98% | 747.223 | 748.2 | C:72.3% | C:72.3% | 22 | Not subject |
| | | | | H:4.6% | H:4.5% | | |
| | | | | N:1.9% | N:1.9% | | |
| Example 5 | 98% | 871.996 | 873.0 | C:74.4% | C:74.4% | 22 | Not subject |
| | | | | H:6.1% | H:6.2% | | |
| | | | | N:1.6% | N:1.5% | | |

**[Table 2-2]**

| | **HPLC purity** (%) | Precision mass calculated value | Measured value (M+H) in mass spectrometry | Calculated value of CHN composition (%) | Measured value by CHN elemental analysis (%) | Reaction rate constant x 10⁻³(s⁻¹) | PFAS regulation |
|---|---|---|---|---|---|---|---|
| Example 6 | 97% | 881.031 | 882.0 | C:75.0% | C:75.1% | 9 | Not subject |
| | | | | H:6.3% | H:6.2% | | |
| | | | | N:3.2% | N:3.2% | | |
| Example 7 | 98% | 812.369 | 813.4 | C:76.8% | C:76.8% | 8 | Not subject |
| | | | | H:6.3% | H:6.4% | | |
| Example 8 | 95% | 880.406 | 881.4 | C:75.0% | C:74.9% | 8 | Not subject |
| | | | | H:6.3% | H:6.3% | | |
| | | | | N:3.2% | N:3.2% | | |
| Example 9 | 98% | 880.406 | 881.4 | C:75.0% | C:75.1% | 9 | Not subject |
| | | | | H:6.3% | H:6.3% | | |
| | | | | N:3.2% | N:3.1% | | |
| Example 10 | 98% | 682.253 | 683.3 | C:77.4% | C:77.4% | 6 | Not subject |
| | | | | H5.3% | H:5.2% | | |

**[Table 2-3]**

| | HPLC purity (%) | Precision mass calculated value | Measured value (M+H) in mass spectrometry | Calculated value of CHN composition (%) | Measured value by CHN elemental analysis (%) | Reaction rate constant x 10⁻³(s⁻¹) | PFAS regulation |
|---|---|---|---|---|---|---|---|
| Example 11 | 98% | 700.244 | 701.2 | C:75.4% | C:75.4% | 6 | Not subject |
| | | | | H:5.0% | H:4.9% | | |
| Example 12 | 98% | 812.369 | 813.4 | C:76.8% | C:76.8% | 9 | Not subject |
| | | | | H:6.3% | H:6.3% | | |
| Example 13 | 98% | 700.244 | 701.2 | C:75.4% | C:75.4% | 7 | **Not** subject |
| | | | | H:5.0% | H:5.1% | | |
| Example 14 | 98% | 728.275 | 729.3 | C:75.8% | C:75.6% | 9 | **Not** subject |
| | | | | H:5.4% | H:5.4% | | |
| Example 15 | 98% | 756.306 | 757.3 | C:76.2% | C:76.1% | 10 | Not subject |
| | | | | H:5.7% | H:5.7% | | |

**[Table 2-4]**

| | HPLC purity (%) | Precision mass calculated value | Measured value (M+H) in mass spectrometry | Calculated value of CHN composition (%) | Measured value by CHN elemental analysis (%) | **Reaction rate** constant x 10⁻³(s⁻¹) | PFAS regulation |
|---|---|---|---|---|---|---|---|
| Example 16 | 98% | 778.347 | 779.3 | C:78.6% | C:78.6% | 18 | Not subject |
| | | | | H:6.2% | H:6.2% | | |
| Example 17 | 96% | 880.406 | 881.4 | C:75.0% | C:75.1% | 9 | Not subject |
| | | | | H:6.3% | H:6.0% | | |
| | | | | N:3.2% | N:3.1% | | |
| Example 18 | 97% | 742.273 | 743.3 | C:76.0% | C:76.1% | 7 | Not subject |
| | | | | H:5.6% | H:5.6% | | |
| Example 19 | 98% | 638.243 | 639.2 | C:80.9% | C:80.8% | 7 | Not subject |
| | | | | H:5.2% | H:5.2% | | |
| Example 20 | 98% | 640.223 | 641.2 | C:78.7% | C:78.7% | 7 | Not subject |
| | | | | H:4.9% | H:4.8% | | |

**[Table 2-5]**

| | HPLC purity (%) | Precision mass calculated value | Measured value (M+H) in mass spectrometry | Calculated value of CHN composition (%) | Measured value by CHN elemental analysis (%) | Reaction rate constant x 10⁻³(s⁻¹) | PFAS regulation |
|---|---|---|---|---|---|---|---|
| Comparative Example 1 | 98% | 693.270 | 694.3 | C: 72.7% | C: 72.7% | 20 | Subject |
| | | | | H: 5.5% | H: 5.4% | | |
| | | | | N: 2.0% | N: 1.9% | | |
| Comparative Example 2 | 98% | 638.228 | 639.2 | C: 73.3% | C: 73.3% | 11 | Subject |
| | | | | H: 5.2% | H: 5.3% | | |
| Comparative Example3 | 98% | 646.272 | 647.3 | C:81.7% | C:81.5% | 4 | Not subject |
| | | | | H:5.9% | H:5.9% | | |

Finally, the above embodiments are summarized.
[1] A photochromic compound represented by General Formula 1 below and having no perfluoromethyl and perfluoromethylene groups: 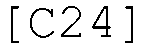 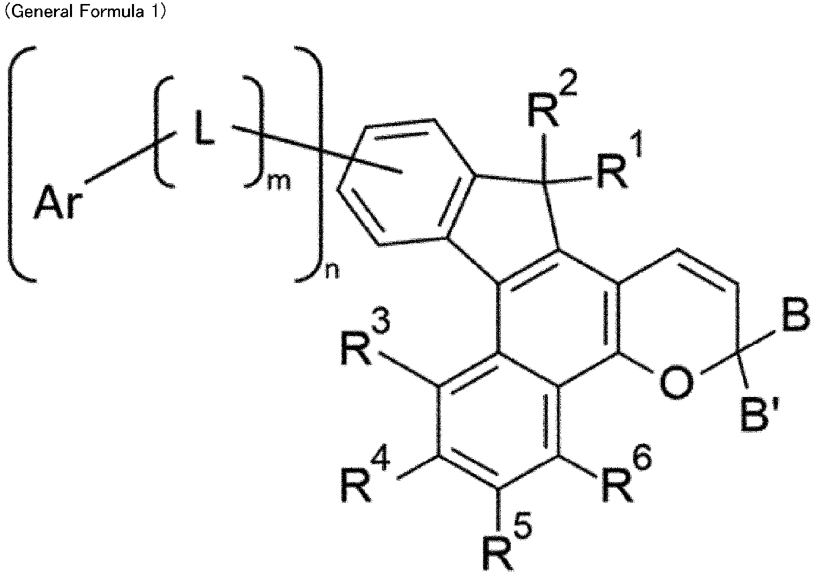 (in General Formula 1, Ar represents a fluorinated aryl group, L represents a divalent linking group, R¹ to R⁶, B, and B' each independently represent a hydrogen atom or a substituent, m represents 0 or 1, and n represents an integer ranging from 1 to 4).
[2] The photochromic compound according to [1], wherein Ar represents a fluorinated phenyl group.
[3] The photochromic compound according to [2], wherein Ar represents a fluorinated phenyl group substituted with three or more fluorine atoms.
[4] The photochromic compound according to [3], wherein Ar represents a perfluorophenyl group.
[5] The photochromic compound according to any one of [1] to [4], wherein at least either of R⁴ and R⁵ represents an electron-donating group.
[6] The photochromic compound according to [5], wherein R⁴ and R⁵ each independently represent an electron-donating group.
[7] The photochromic compound according to [5] or [6], wherein the electron-donating group is an electron-donating group selected from an alkoxy group, a morpholino group, and a piperidino group.
[8] The photochromic compound according to any one of [1] to [4], wherein R⁴ and R⁵ each represent a hydrogen atom.
[9] The photochromic compound according to any one of [1] to [4], wherein R⁵ represents a fluorinated aryl group.
[10] The photochromic compound according to [9], wherein the fluorinated aryl group represented by R⁵ is a perfluoroaryl group.
[11] The photochromic compound according to any one of [1] to [10], wherein B and B' each independently represent a substituted or unsubstituted phenyl group.
[12] The photochromic compound according to any one of [1] to [11], wherein R¹ and R² each independently represent a substituted or unsubstituted alkyl group.
[13] The photochromic compound according to any one of [1] to [12], wherein R¹ and R² each independently represent a substituted or unsubstituted alkyl group having 2 or more carbon atoms; and
   B and B' each independently represent an unsubstituted phenyl group or a methoxy group-substituted phenyl group.
[14] The photochromic compound according to any one of [1] to [12], wherein R¹ and R² each independently represent a substituted or unsubstituted alkyl group having 2 or more carbon atoms; and
   at least either of B and B' represents an amino group-substituted phenyl group.
[15] The photochromic compound according to any one of [1] to [12], wherein R¹ and R² each represent a methyl group; and
   at least either of B and B' represents an amino group-substituted phenyl group.
[16] The photochromic compound according to any one of [1] to [12], wherein R¹ and R² each represent a methyl group; and
   B and B' each independently represent an unsubstituted phenyl group or a methoxy group-substituted phenyl group.
[17] The photochromic compound according to any one of [1] to [11], wherein R¹ and R² are bonded together to form a ring structure having 3 or more carbon atoms, the ring structure constituting a ring including a carbon atom at 13-position of indeno-condensed naphthopyran.
[18] The photochromic compound according to any one of [1] to [17], wherein R³ and R⁶ each represent a hydrogen atom.
[19] The photochromic compound according to any one of [1] to [18], wherein n represents 1 or 2, and m represents 0.
[20] A photochromic composition including the photochromic compound as defined in any one of [1] to [19].
[21] The photochromic composition according to [20], further including a polymerizable compound.
[22] A photochromic article including a cured product obtained by curing the photochromic composition as defined in [21].
[23] The photochromic article according to [22], including a substrate and a photochromic layer which is the cured product.
[24] The photochromic article according to [22] or [23], which is a spectacle lens.
[25] The photochromic article according to [22] or [23], which is a goggle lens, a visor part of a sun visor, or a shield component of a helmet.
[26] Spectacles including the spectacle lens as defined in [24].

Two or more of the various embodiments and various forms described in this specification may be combined in any combination.

The embodiment disclosed should be considered illustrative in all respects and not restrictive. The scope of the present invention is shown not by the above description but by the scope of the claims, and is intended to encompass all modifications within equivalent meaning and scope to the scope of the claims.

### Industrial Applicability

One aspect of the present invention is beneficial in the technical fields of spectacles, goggles, sun visors, helmets, and the like.

## Claims

1. A photochromic compound represented by General Formula 1 below and having no perfluoromethyl and perfluoromethylene groups: 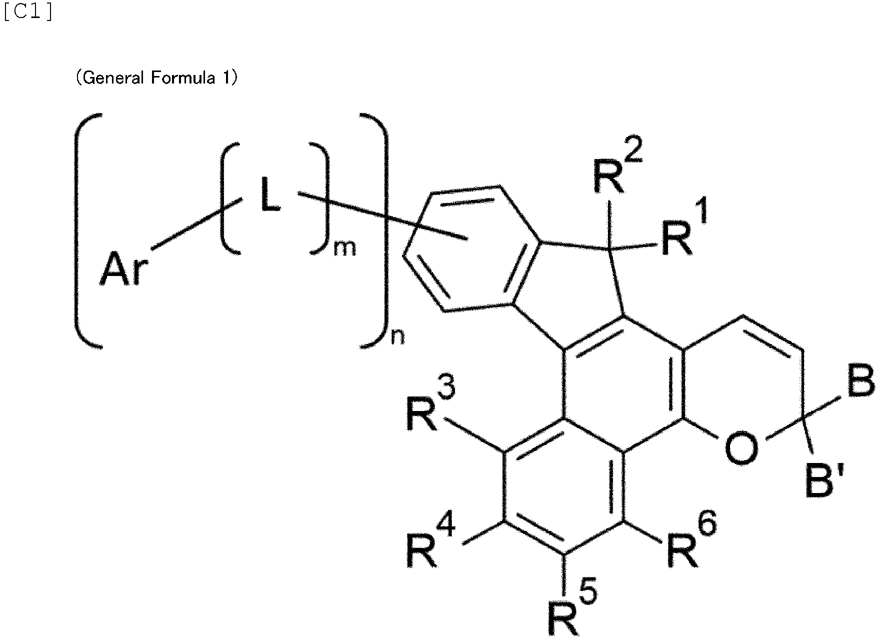 (in General Formula 1, Ar represents a fluorinated aryl group, L represents a divalent linking group, R¹ to R⁶, B, and B' each independently represent a hydrogen atom or a substituent, m represents 0 or 1, and n represents an integer ranging from 1 to 4).

2. The photochromic compound according to claim 1, wherein Ar represents a fluorinated phenyl group.

3. The photochromic compound according to claim 2, wherein Ar represents a fluorinated phenyl group substituted with three or more fluorine atoms.

4. The photochromic compound according to claim 3, wherein Ar represents a perfluorophenyl group.

5. The photochromic compound according to any one of claims 1 to 4, wherein at least either of R⁴ and R⁵ represents an electron-donating group.

6. The photochromic compound according to claim 5, wherein R⁴ and R⁵ each independently represent an electron-donating group.

7. The photochromic compound according to claim 5 or 6,
wherein the electron-donating group is an electron-donating group selected from an alkoxy group, a morpholino group, and a piperidino group.

8. The photochromic compound according to any one of claims 1 to 4, wherein R⁴ and R⁵ each represent a hydrogen atom.

9. The photochromic compound according to any one of claims 1 to 4, wherein R⁵ represents a fluorinated aryl group.

10. The photochromic compound according to claim 9, wherein the fluorinated aryl group represented by R⁵ is a perfluoroaryl group.

11. The photochromic compound according to any one of claims 1 to 10, wherein B and B' each independently represent a substituted or unsubstituted phenyl group.

12. The photochromic compound according to any one of claims 1 to 11, wherein R¹ and R² each independently represent a substituted or unsubstituted alkyl group.

13. The photochromic compound according to any one of claims 1 to 12, wherein
R¹ and R² each independently represent a substituted or unsubstituted alkyl group having 2 or more carbon atoms; and
B and B' each independently represent an unsubstituted phenyl group or a methoxy group-substituted phenyl group.

14. The photochromic compound according to any one of claims 1 to 12, wherein
R¹ and R² each independently represent a substituted or unsubstituted alkyl group having 2 or more carbon atoms; and
at least either of B and B' represents an amino group-substituted phenyl group.

15. The photochromic compound according to any one of claims 1 to 12, wherein
R¹ and R² each represent a methyl group; and
at least either of B and B' represents an amino group-substituted phenyl group.

16. The photochromic compound according to any one of claims 1 to 12, wherein
R¹ and R² each represent a methyl group; and
B and B' each independently represent an unsubstituted phenyl group or a methoxy group-substituted phenyl group.

17. The photochromic compound according to any one of claims 1 to 11, wherein R¹ and R² are bonded together to form a ring structure having 3 or more carbon atoms, the ring structure constituting a ring including a carbon atom at 13-position of indeno-condensed naphthopyran.

18. The photochromic compound according to any one of claims 1 to 17, wherein R³ and R⁶ each represent a hydrogen atom.

19. The photochromic compound according to any one of claims 1 to 18, wherein n represents 1 or 2, and m represents 0.

20. A photochromic composition comprising the photochromic compound as defined in any one of claims 1 to 19.

21. The photochromic composition according to claim 20, further comprising a polymerizable compound.

22. A photochromic article comprising a cured product obtained by curing the photochromic composition as defined in claim 21.

23. The photochromic article according to claim 22, comprising a substrate and a photochromic layer which is the cured product.

24. The photochromic article according to claim 22 or 23, which is a spectacle lens.

25. The photochromic article according to claim 22 or 23, which is a goggle lens, a visor part of a sun visor, or a shield component of a helmet.

26. Spectacles comprising the spectacle lens as defined in claim 24.
